# EUROPEAN PATENT APPLICATION

(11) **EP 4 622 338 A1**
(43) Date of publication of application: **24.09.2025**
(21) Application number: 23899878.5
(22) Date of filing: 30.11.2023
(51) Int. Cl.: H04W 28/08, G06F 9/50

(54) **COMMUNICATION METHOD, COMMUNICATION APPARATUS, COMMUNICATION SYSTEM, MEDIUM, CHIP AND PROGRAM PRODUCT**

(30) Priority: 09.12.2022 CN 202211593683
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN); SUN, Fei, Shenzhen, Guangdong 518129 (CN); LOU, Chong, Shenzhen, Guangdong 518129 (CN); CHEN, Weimin, Shenzhen, Guangdong 518129 (CN)
(74) Representative: Pfenning, Meinig & Partner mbB
(86) International application number: PCT/CN2023/135558
(87) International publication number: WO 2024/120300

(57) **Abstract**

A communication method, a communication apparatus, a communication system, a computer-readable storage medium, a chip, and a computer program product are provided. The communication method includes: A computing management unit determines an available computing resource of N edge computing nodes, where N is an integer greater than or equal to 1. The computing management unit determines allocation of a computing task to the N edge computing nodes based on the available computing resource. In this manner, joint computing between edge computing nodes can be simplified, system design can be simplified, costs can be reduced, and security can be improved.

## Description

### TECHNICAL FIELD

Embodiments of this application relate to the communication field, and more specifically, to a communication method, a communication apparatus, a communication system, a computer-readable storage medium, a chip, and a computer program product that are for performing joint computing and transmission by an edge computing node.

### BACKGROUND

The 3rd generation partnership project (3rd Generation Partnership Project, 3GPP)-oriented 5G (5th Generation) and future 6G (6th Generation) networks lead to a sharp increase in computing load on a RAN side. In this case, in a multi-access edge computing (Multi-access Edge Computing, MEC) architecture of 3GPP, the computing load on the RAN side or an application service of a user equipment (User Equipment, UE) is offloaded (Offloaded) to a MEC server located at an edge of the RAN.

Therefore, a suitable mechanism for performing joint computing and transmission by a MEC node needs to be studied, to uniformly, flexibly, and quickly schedule communication and computing resources of all parts of a network (for example, the RAN). In this way, overall resource use efficiency of a system is improved and a transmission delay is reduced.

### SUMMARY

To provide a suitable mechanism for performing joint computing and transmission by an edge computing node, embodiments of this application provide a communication method, a communication apparatus, a communication system, a computer-readable storage medium, a chip, and a computer program product that are for performing joint computing and transmission by an edge computing node, so that communication and computing resources of all parts of a network can be uniformly, flexibly, and quickly scheduled, thereby improving overall resource use efficiency of a system and reducing a transmission delay.

According to a first aspect of this application, a communication method is provided. The communication method includes: A computing management unit determines an available computing resource of N edge computing nodes, where N is an integer greater than or equal to 1. The computing management unit determines allocation of a computing task to the N edge computing nodes based on the available computing resource. In this manner, a solution in which a computing management function (Computing Management Function, CMF) on a RAN side locally controls an edge computing node to perform joint computing and task allocation is simple and convenient, and no conventional MEC host (MEC host) and MEC configuration server needs to be additionally deployed. This can simplify joint computing between edge computing nodes, so that a data forwarding delay can be reduced, and use efficiency of the edge computing node can be improved.

In some embodiments of the first aspect, the computing management unit is located on a radio access network and/or a core network. In this manner, the solution in which the CMF on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay is reduced, and the use efficiency of the edge computing node is improved.

In some embodiments of the first aspect, the determining allocation of a computing task to the N edge computing nodes includes: The computing management unit determines the allocation of the computing task to the N edge computing nodes based on capability information, where the capability information includes at least one of computing capability information, service capability information, or communication capability information. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the first aspect, before the determining allocation of a computing task to the N edge computing nodes, the communication method further includes: The computing management unit receives the capability information from the N edge computing nodes. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the first aspect, the communication method further includes: The computing management unit receives a computing request from a terminal device. In this manner, the solution in which the CMF function on the RAN side locally controls the edge computing node to perform joint computing and task allocation is simple and convenient, so that the data forwarding delay can be reduced, and the use efficiency of the edge computing node can be improved.

In some embodiments of the first aspect, the computing request includes at least one of a service type, a computing power requirement, or a communication requirement. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the first aspect, the computing request further includes information related to a subtask decomposed from the computing task. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the first aspect, the determining allocation of a computing task to the N edge computing nodes includes: The computing management unit selects M edge computing nodes from the N edge computing nodes based on at least one of the capability information or the computing request, where M is an integer greater than or equal to 1, and M is less than or equal to N. The computing management unit determines allocation of the computing task to the M edge computing nodes. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the first aspect, the communication method further includes: The computing management unit sends allocation indication information to the M edge computing nodes, where the allocation indication information indicates the allocation. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the first aspect, the allocation indication information includes information about one or more subtasks of the computing task, and information about allocation of the one or more subtasks to the M edge computing nodes. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the first aspect, the allocation indication information includes a set including a number of the one or more subtasks of the computing task, and an association relationship between the one or more subtasks and the M edge computing nodes, where the association relationship indicates a specific edge computing node in the M edge computing nodes that completes the one or more subtasks or specific edge computing nodes that repeatedly complete the one or more subtasks. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the first aspect, the communication method further includes: The computing management unit sends a computing request response to the terminal device in response to the computing request, where the computing request response includes at least one of the following: information about a plurality of subtasks of the computing task, and information about allocation of the plurality of subtasks to the M edge computing nodes, or a transmission manner of a computing result of each of a plurality of subtasks. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved. RAN AI computing and application (Application, App) computing may be further uniformly designed to simplify a system and reduce costs.

In some embodiments of the first aspect, the computing request includes at least one of the service type, the computing power requirement, or the communication requirement. The service type includes at least one of a service type identifier or an application ID. The computing power requirement includes at least one of a processor type, a processor quantity, a processor dominant frequency, or a processor operation capability. The communication requirement includes at least one of a data transmission bit rate, a data transmission throughput, a data packet transmission delay, data transmission reliability, or a 5G quality of service indicator defined by a 5GS. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved. The RAN AI computing and the application computing may be further uniformly designed to simplify the system and reduce the costs.

In some embodiments of the first aspect, the communication method further includes: The computing management unit sends a joint transmission indication to the M edge computing nodes, where the joint transmission indication indicates one or more groups of edge computing nodes including one or more of the M edge computing nodes to jointly send a computing result of the one or more subtasks to the terminal device. In this manner, the CMF on the RAN side may control a plurality of edge computing nodes to perform joint transmission, so that the use efficiency of the edge computing node is improved, a physical layer transmission rate and physical layer transmission reliability are effectively improved, and traffic steering via a user plane anchor is not needed, thereby reducing the data forwarding delay.

In some embodiments of the first aspect, the joint transmission indication further indicates the one or more groups of edge computing nodes to perform time synchronization and/or content synchronization on the computing result of the one or more subtasks. In this manner, the CMF on the RAN side may control the plurality of edge computing nodes to perform joint transmission, so that the use efficiency of the edge computing node is improved, the physical layer transmission rate and the physical layer transmission reliability are effectively improved, and the traffic steering via the user plane anchor is not needed, thereby reducing the data forwarding delay.

In some embodiments of the first aspect, the joint transmission indication includes number information of the one or more subtasks corresponding to the jointly transmitted computing result, information about an edge computing node associated with the one or more subtasks, and information about a position of a time-frequency resource used to perform joint transmission of the computing result. In this manner, the CMF on the RAN side may control the plurality of edge computing nodes to perform joint transmission, so that the use efficiency of the edge computing node is improved, the physical layer transmission rate and the physical layer transmission reliability are effectively improved, and the traffic steering via the user plane anchor is not needed, thereby reducing the data forwarding delay.

In some embodiments of the first aspect, in the communication method, the computing management unit further performs at least one of the following operations: at least one of registration, management, discovery, and update of an application App; at least one of distributed or centralized management, allocation, migration, or offloading of a computing task; providing radio network information (Radio Network Information, RNI) and location information of a terminal device for an application App; performing application programming interface (Application Programming Interface, API) release and RNI access management; or interacting, by using control plane signaling or user plane signaling, with at least one of the following: the N edge computing nodes, the terminal device, an application App running on the N edge computing nodes, or an application App running on the terminal device. In this manner, the CMF on the RAN side may control the plurality of edge computing nodes to perform joint transmission, so that the use efficiency of the edge computing node is improved, the physical layer transmission rate and the physical layer transmission reliability are effectively improved, and the traffic steering via the user plane anchor is not needed, thereby reducing the data forwarding delay. The RAN AI computing and the application computing may be further uniformly designed to simplify the system and reduce the costs.

In some embodiments of the first aspect, the computing management unit is included in a base station. For example, the computing management unit meets one of the following: The computing management unit is included in a central unit (Central Unit, CU) of the base station; the computing management unit is integrated into a near real-time radio access network intelligent controller (Near Real-Time RAN Intelligent Controller, NRT-RIC) or a non-real-time radio access network intelligent controller (Non-Real-Time RIC, Non-RT RIC) of the base station; or the computing management unit integrates an NRT-RIC or a Non-RT RIC in the base station, and runs a third-party application App. In this manner, the RAN may control capability exposure of the RAN, so that there is no security risk. The RAN AI computing and the application App computing are uniformly designed to simplify the system and reduce the costs. An App runs on the RAN (for example, on an open RIC module) and is not exposed to a security risk due to an external factor. Therefore, a leakage risk can be avoided and security is higher. An edge computing architecture is combined with an open-RAN (Open-RAN, O-RAN) architecture, so that the O-RAN architecture and interface are slightly changed. This is easy to implement. In addition, the App may optimize service experience based on the radio network information.

In some embodiments of the first aspect, in the communication method, the computing management unit is independent of the N edge computing nodes. In this manner, a solution in which the CMF function on the RAN side may still locally control a plurality of edge computing nodes to perform joint computing and task allocation is used. This can simplify the joint computing between the edge computing nodes, so that the data forwarding delay can be reduced, and the use efficiency of the edge computing node can be improved. In addition, a coupling degree between the computing management unit and the N edge computing nodes is low, so that a system design and an implementation of the system design can be simplified, and system maintenance is easy.

According to a second aspect of this application, a communication method is provided. The communication method includes: A terminal device sends a computing request to a computing management unit. The terminal device receives a computing request response from the computing management unit, where the computing request response includes at least one of the following: information about a plurality of subtasks of a computing task, and information about allocation of the plurality of subtasks to M edge computing nodes, or a transmission manner of a computing result of each of a plurality of subtasks, where M is an integer greater than or equal to 1. In this manner, a solution in which a CMF function on a RAN side locally controls an edge computing node to perform joint computing and task allocation is simple and convenient, and no conventional MEC host and MEC configuration server needs to be additionally deployed. This can simplify joint computing between edge computing nodes, so that a data forwarding delay can be reduced, and use efficiency of the edge computing node can be improved.

In some embodiments of the second aspect, the computing request includes at least one of a service type, a computing power requirement, or a communication requirement. For example, the service type includes at least one of a service type identifier or an application ID. The computing power requirement includes at least one of a processor type, a processor quantity, a processor dominant frequency, or a processor operation capability. The communication requirement includes at least one of a data transmission bit rate, a data transmission throughput, a data packet transmission delay, data transmission reliability, or a 5G quality of service indicator (5G QoS identifier, 5QI) defined by a 5G system (5G system, 5GS). In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved. RAN AI computing and application computing may be further uniformly designed to simplify a system and reduce costs.

In some embodiments of the second aspect, the computing request further includes information related to a subtask decomposed from the computing task. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the second aspect, the communication method further includes: The terminal device offloads the computing task to the M edge computing nodes in response to the computing request response, where the M edge computing nodes include at least one of the following: a base station, another terminal device, a MEC platform, a core network function, or a wireless backhaul network node. In this manner, a solution in which the CMF function on the RAN side locally controls a plurality of edge computing nodes to perform joint computing and task allocation is simple and convenient, and no conventional MEC host and MEC configuration server needs to be additionally deployed. This can simplify joint computing between the plurality of edge computing nodes, so that the data forwarding delay can be reduced, and the use efficiency of the edge computing node can be improved. The RAN AI computing and the application App computing may be further uniformly designed to simplify the system and reduce the costs.

In some embodiments of the second aspect, the offloading the computing task to the M edge computing nodes includes: The terminal device uploads to-be-computed data to the M edge computing nodes. The terminal device receives, from the M edge computing nodes, a computing result corresponding to the to-be-computed data. In this manner, the joint computing between the plurality of edge computing nodes can be simplified, so that the data forwarding delay can be reduced, and the use efficiency of the edge computing node can be improved.

In some embodiments of the second aspect, the uploading to-be-computed data to the M plurality of edge computing nodes includes: The terminal device uploads the to-be-computed data to a first edge computing node in the M edge computing nodes. The first edge computing node forwards the to-be-computed data to another edge computing node in the M edge computing nodes. In this way, the data forwarding delay can be reduced, and the use efficiency of the edge computing node can be improved.

In some embodiments of the second aspect, the receiving a computing result from the M edge computing nodes includes: The terminal device receives, from the M edge computing nodes, the computing result jointly transmitted by the M edge computing nodes. In this manner, the CMF on the RAN side controls the plurality of edge computing nodes to perform joint transmission, so that a physical layer transmission rate and physical layer transmission reliability are effectively improved, and traffic steering via a user plane anchor is not needed, thereby reducing the data forwarding delay and improving the use efficiency of the edge computing node.

According to a third aspect of this application, a communication method is provided. The communication method includes: An edge computing node sends capability information to a computing management unit. The edge computing node receives allocation indication information of a computing task from the computing management unit, where the capability information includes at least one of computing capability information, service capability information, or communication capability information. In this manner, a CMF on a RAN side can control a plurality of edge computing nodes to perform joint transmission, so that a physical layer transmission rate and physical layer transmission reliability are effectively improved, and traffic steering via a user plane anchor is not needed, thereby reducing a data forwarding delay and improving use efficiency of the edge computing node.

In some embodiments of the third aspect, the allocation indication information includes information about a plurality of subtasks of the computing task and information about allocation of the plurality of subtasks to M edge computing nodes including the edge computing node, where M is an integer greater than or equal to 1. In this manner, a solution in which the CMF function on the RAN side locally controls the plurality of edge computing nodes to perform joint computing and task allocation is simple and convenient, and no conventional MEC host and MEC configuration server needs to be additionally deployed. This can simplify joint computing between edge computing nodes, so that the data forwarding delay can be reduced, and the use efficiency of the edge computing node can be improved.

In some embodiments of the third aspect, the communication method further includes: The edge computing node receives to-be-computed data of one or more subtasks from a terminal device. The edge computing node sends, to the terminal device, a computing result corresponding to the to-be-computed data. In this manner, the solution in which the CMF function on the RAN side locally controls the plurality of edge computing nodes to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the third aspect, that the edge computing node receives to-be-computed data from a terminal device includes: The edge computing node directly receives the to-be-computed data from the terminal device; or the edge computing node receives the to-be-computed data from another edge computing node that directly receives the to-be-computed data. In this manner, the solution in which the CMF function on the RAN side locally controls the plurality of edge computing nodes to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the third aspect, the communication method further includes: The edge computing node sends, to another edge computing node that participates in computing of the to-be-computed data, the to-be-computed data directly received from the terminal device. In this manner, the solution in which the CMF function on the RAN side locally controls the plurality of edge computing nodes to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments of the third aspect, the communication method further includes: The edge computing node receives a joint transmission indication from the computing management unit. In this manner, the CMF on the RAN side controls the plurality of edge computing nodes to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

In some embodiments of the third aspect, the communication method further includes: The edge computing node synchronizes, based on the joint transmission indication, the computing result with another edge computing node that receives the joint transmission indication; or the edge computing node synchronizes the computing result by negotiating with another edge computing node that receives the joint transmission indication. In this manner, the CMF on the RAN side controls the plurality of edge computing nodes to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

In some embodiments of the third aspect, the synchronization includes at least one of time synchronization or content synchronization. In this manner, the CMF on the RAN side controls the plurality of edge computing nodes to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

In some embodiments of the third aspect, that the edge computing node sends, to the terminal device, a computing result includes: The edge computing node and the another edge computing node jointly transmit a synchronized computing result to the terminal device. In this manner, the CMF on the RAN side controls the plurality of edge computing nodes to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

In some embodiments of the third aspect, jointly transmitting a synchronized computing result to the terminal device includes: The edge computing node and the another edge computing node jointly transmit the computing result in at least one of the following joint transmission manners: a coherent joint transmission manner, a non-coherent joint transmission manner, or a combination thereof. In this manner, the CMF on the RAN side controls the plurality of edge computing nodes to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

According to a fourth aspect of this application, a communication apparatus is provided. The communication apparatus includes a processor and a memory. The memory stores instructions executed by the processor. When the instructions are executed by the processor, the communication apparatus is enabled to implement the method in any one of the possible embodiments of the first aspect.

According to a fifth aspect of this application, a communication apparatus is provided. The communication apparatus includes a processor and a memory. The memory stores instructions executed by the processor. When the instructions are executed by the processor, the communication apparatus is enabled to implement the method in any one of the possible embodiments of the second aspect.

According to a sixth aspect of this application, a communication apparatus is provided. The communication apparatus includes a processor and a memory. The memory stores instructions executed by the processor. When the instructions are executed by the processor, the communication apparatus is enabled to implement the method in any one of the possible embodiments of the third aspect.

According to a seventh aspect of this application, a communication system is provided. The communication system includes a computing management unit, a terminal device, and an edge computing node, and is configured for implementing the method in any one of the possible embodiments of the first aspect, the second aspect, or the third aspect via the computing management unit, the terminal device, and the edge computing node.

According to an eighth aspect of this application, a computer-readable storage medium is provided. The computer-readable storage medium stores a computer program. When the computer program is executed by a processor, the method in any one of the possible embodiments of the first aspect, the second aspect, or the third aspect is implemented.

According to a ninth aspect of this application, a chip is provided. The chip includes a processing circuit, configured to perform the method in any one of the possible embodiments of the first aspect, the second aspect, or the third aspect.

According to a tenth aspect of this application, a computer program product is provided. The computer program product is tangibly stored in a computer-readable medium and includes computer-executable instructions. When the computer-executable instructions are executed, a device is enabled to implement the method in any one of the possible implementations of the first aspect, the second aspect, or the third aspect.

According to the technical solutions of this application, a solution in which a CMF function on a RAN side locally controls an edge computing node to perform joint computing and task allocation is simple and convenient, and no conventional core network function, MEC host, and MEC configuration server needs to be additionally deployed. This can simplify joint computing between edge computing nodes, so that a data forwarding delay can be reduced, and use efficiency of edge computing can be improved. RAN AI computing and application App computing may be further uniformly designed to simplify a system and reduce costs. In addition, the RAN controls capability exposure of the RAN, so that there is no security risk. An App runs on the RAN (for example, on an open RIC module) and is not exposed to a security risk due to an external factor. Therefore, a leakage risk can be avoided and security is higher. In addition, the App may optimize service experience based on radio network information. In addition, the CMF on the RAN side controls a plurality of edge computing nodes to perform joint transmission, so that a physical layer transmission rate and physical layer transmission reliability can be effectively improved, and traffic steering via a user plane anchor is not needed. In addition, an edge computing architecture may be combined with an O-RAN architecture, so that the O-RAN architecture and interface are slightly changed. This is easy to implement.

The summary part is provided to describe related concepts in a simplified form. The concepts are further described in the following descriptions of embodiments. The summary part is not intended to identify key features or main features of this application, and is not intended to limit the scope of embodiments of this application.

### BRIEF DESCRIPTION OF DRAWINGS

The foregoing and other objectives, features, and advantages in this application become more apparent by describing the example embodiments of this application in more detail with reference to accompanying drawings. In the example embodiments of this application, same reference numerals usually represent same elements.
FIG. 1A is a block diagram of a communication system in which an embodiment of this application can be implemented;
FIG. 1B is another block diagram of a communication system in which an embodiment of this application can be implemented;
FIG. 1C is a block diagram of an embedded computing management function according to an embodiment of this application;
FIG. 1D is a block diagram of computing task downloading in a communication system 160 according to an embodiment of this application;
FIG. 2 is a diagram of signaling exchange in a communication process according to some embodiments of this application;
FIG. 3 is a diagram of a procedure of performing joint computing and transmission by a plurality of edge computing nodes according to an embodiment of this application;
FIG. 4A is a diagram of a procedure of performing joint rendering and transmission by a plurality of edge computing nodes according to an embodiment of this application;
FIG. 4B is a diagram of a procedure of performing joint rendering and transmission by a plurality of edge computing nodes according to an embodiment of this application;
FIG. 5A is a diagram of a gNB-RIC function based on an O-RAN architecture according to an embodiment of this application;
FIG. 5B is a diagram of a gNB-RIC function based on an O-RAN architecture according to an embodiment of this application;
FIG. 6 is a flowchart of an example method performed by a computing management unit according to some embodiments of this application;
FIG. 7 is a flowchart of an example method performed by a terminal device according to some embodiments of this application;
FIG. 8 is a flowchart of an example method performed by an edge computing node according to some embodiments of this application;
FIG. 9 is a block diagram of a computing management unit according to some embodiments of this application;
FIG. 10 is a block diagram of a terminal device according to some embodiments of this application;
FIG. 11 is a block diagram of an edge computing node according to some embodiments of this application; and
FIG. 12 is a simplified block diagram of an example device suitable for implementing an embodiment of this application.

### DESCRIPTION OF EMBODIMENTS

Embodiments of this specification are described in more detail in the following with reference to the accompanying drawings. Although some embodiments of this specification are shown in the accompanying drawings, it should be understood that this specification can be implemented in various forms, and should not be construed as being limited to embodiments described herein. On the contrary, these embodiments are provided for a more thorough and complete understanding of this specification. It should be understood that the accompanying drawings and embodiments of this specification are merely used as examples and are not intended to limit the protection scope of this specification.

In descriptions of embodiments of this specification, the term "including" and similar terms thereof should be understood as non-exclusive inclusions, that is, "including but not limited to". The term "based on" should be understood as "at least partially based on". The term "one embodiment" or "this embodiment" should be understood as "at least one embodiment". In embodiments of this application, for a type of technical feature, "first", "second", "third", and the like are used to distinguish between technical features in the type of technical feature, and there is no time or magnitude order between the technical features described by "first", "second", and "third". Other explicit and implicit definitions may also be included below.

Embodiments of this application may be implemented according to any suitable communication protocol, including but not limited to cellular communication protocols such as 3GPP 3rd generation (3rd Generation, 3G), 4th generation (4th Generation, 4G), 5th generation (5G), and future communication protocols (for example, 6th generation (6G)), wireless local area network communication protocols such as the Institute of Electrical and Electronics Engineers (Institute of Electrical and Electronics Engineers, IEEE) 802.11, and any other protocols currently known or developed in future.

The technical solutions of embodiments of this application are applied to a communication system that complies with any suitable communication protocol, for example, a general packet radio service (General Packet Radio Service, GPRS) system, a global system for mobile communications (Global System for Mobile Communications, GSM), an enhanced data rates for GSM evolution (Enhanced Data rates for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation (5G) system (for example, a new radio (New Radio, NR) system) and a future communication system (for example, a 6th generation (6G) system), and the like. The technical solutions provided in this application may be further applied to end to end (end to end, E2E) communication, device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

For the purpose of illustration, the following describes embodiments of this application in a background of a 5G communication system. However, it should be understood that embodiments of this application are not limited to the communication system, but may be applied to any communication system having a similar problem, for example, a wireless local area network (Wireless Local Area Network, WLAN), a wired communication system, or another communication system developed in the future.

The term "terminal device" used in this specification refers to any terminal device that can perform wired or wireless communication with a network device or between terminal devices. The terminal device may sometimes be referred to as a user equipment (user equipment, UE), an application terminal, an access terminal, a subscriber unit, a subscriber station, a mobile station, a remote station, a remote terminal, a mobile device, a user terminal, a terminal, a wireless communication device, a user agent, or a user apparatus. Currently, some examples of the terminal device are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), and the like. This is not limited in embodiments of this application. By way of example and not limitation, the terminal device in embodiments of this application may alternatively be a terminal device in an IoT system. An IoT is an important part of future development of information technologies. A main technical feature of the IoT is connecting a thing to a network by using a communication technology, to implement an intelligent network for interconnection between a person and a machine or between one thing and another. It may be understood that the terminal device in embodiments of this application may be a terminal that implements an application, for example, a terminal having a camera function, or a terminal that can perform data transmission. In embodiments of this application, an apparatus configured to implement a function of the terminal device may be a terminal device; or may be an apparatus that can support the terminal device in implementing the function (for example, a chip system or a chip). The apparatus may be installed in the terminal device. In embodiments of this application, the chip system may include a chip, or may include a chip and another discrete component.

The term "network device" used in this specification is an entity or a node that may be configured to communicate with the terminal device, for example, may be an access network device. The access network device may be an apparatus that is deployed in a radio access network and that provides a wireless communication function for a mobile terminal. For example, the access network device may be a radio access network device. The access network device may include base stations of various types. The base station is configured to provide a radio access service for the terminal device. Specifically, each base station corresponds to a service coverage area, and a terminal device entering the area may communicate with the base station by using a radio signal, to receive a radio access service provided by the base station. Service coverage areas of base stations may overlap, and a terminal device in an overlapping area may receive radio signals from a plurality of base stations. Therefore, the plurality of base stations may simultaneously provide services for the terminal device. Based on a size of the provided service coverage area, the access network device may include a macro base station providing a macro cell (Macro cell), a micro base station providing a micro cell (Pico cell), a pico base station providing a pico cell, and a femto base station providing a femto cell (Femto cell). In addition, the access network device may further include various forms of relay stations, access points, remote radio units (Remote Radio Unit, RRU), radio-frequency heads (Radio Head, RH), remote radio heads (Remote Radio Head, RRH), and the like. In systems using different radio access technologies, names of access network devices may be different. For example, the access network device is referred to as a NodeB (NodeB, NB) in a 3G network, is referred to as an evolved NodeB (evolved NodeB, eNB, or eNodeB) in a long term Evolution (Long Term Evolution, LTE) system network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and the DU may be deployed in different places. For example, the DU is remotely deployed in a high-traffic area, and the CU is deployed in a central equipment room. Alternatively, the CU and the DU may be deployed in a same equipment room. The CU and the DU may alternatively be different components in a same rack. For ease of description, in subsequent embodiments of this application, the foregoing apparatuses that provide the wireless communication function for the mobile terminal are collectively referred to as a network device. This is not specifically limited in embodiments of this application.

As described above, for 5G and future 6G networks, a RAN is more intelligent, and optimization of an internal network service may be completed in an artificial intelligence manner. For example, current 3GPP Release-18 discusses how to use AI to resolve problems such as optimal beam prediction, channel state information (Channel State Information, CSI) prediction, and line-of-sight/non-line-of-sight (Line-of-Sight/Non-Line-of-Sight, LOS/NLOS) path identification needed for positioning. In addition, the AI is also considered to resolve problems such as upper-layer cell energy efficiency and load prediction, and UE mobility prediction. An AI inference service has a high real-time requirement and an AI model is large (for example, a residual neural network ResNet-152 proposed by Microsoft has 152 layers and 60 million parameters). Therefore, an inference speed needs to be improved to complete the real-time inference service. A high AI requirement on the RAN side leads to a sharp increase in computing load on the RAN side, but computing power of a network device (for example, a processing capability of a baseband chip of a current base station) is limited.

In addition, third-party application services, such as VR/AR and cloud gaming, have high requirements on a network transmission delay and a server processing delay. These services are offloaded from a cloud service location to the RAN side. In addition, rendering of a high-frame-rate and high-resolution picture in short time requires a high processing speed of a processor. When a processing capability of a single graph processing unit (Graph Processing Unit, GPU) is insufficient, a plurality of GPUs are required for parallel accelerated processing. For example, 8K@120 fps (8K resolution: 7680x4320; and fps: frames per second, frames per second) picture rendering is estimated to require computing power of hundreds of TFLOPS (Tera Floating-point operations per second, a speed of 1 trillion (=10^12) floating-point operations per second). Based on computing power of a current mainstream GPU (for example, computing power of GeForce RTX 3090 Ti@FP32 (single-precision) is 40 to 45 TFLOPS), distributed rendering needs to be performed in parallel.

For the sharp increase in the computing load on the RAN side, a solution is to offload the computing load on the RAN side or an application service of a UE to a computing server at a network edge by using a conventional MEC mechanism. In a MEC architecture provided by 3GPP, a computing server is deployed on a data network (DN) behind a UPF, and exchanges data with a 5G system through an N6 interface. In the 5G network, a protocol data unit (Protocol Data Unit, PDU) is a basic unit of data sent between peer protocol layers. A data transmission channel between the UE and the DN is implemented by establishing a PDU session. Both the UE and an application server may initiate PDU session establishment.

However, when a computing service requires joint computing performed by a plurality of MEC servers, the computing task needs to be forwarded to the plurality of MEC servers through multi-hop routing via a gateway like a UPF. This causes a complex procedure and high interaction delay overheads. In addition, an output data amount of an application service like VR/AR is large, and once a downlink air interface transmission link encounters severe interference or deep fading, a service transmission delay is extremely long. This affects user experience. Therefore, these services not only require joint computing performed by a plurality of nodes, but also require joint transmission performed by the plurality of nodes, to improve a downlink transmission rate, so that the transmission delay is reduced. In this case, a transmission reception point (also referred to as a "transceiver unit", Transmission Reception Point, TRP) is introduced in 5G. A plurality of antennas that are physically separated or a plurality of antenna panels on a same antenna form a multi-TRP, to obtain a maximum beamforming gain or a reliability gain of space diversity. This improves downlink coverage, reliability, or a rate.

Therefore, for a series of edge computing service requirements such as RAN intelligence and third-party application offloading, a suitable mechanism for performing joint computing and transmission by a plurality of edge nodes needs to be researched, to uniformly, flexibly, and quickly schedule communication and computing resources of all parts of a network. Therefore, overall resource use efficiency of a system is improved.

In a 5G protocol, a PDU session may have a plurality of N6 interfaces at the same time. AUPF connected to each N6 interface is referred to as a PDU session anchor (PDU Session Anchor, PSA). PDU session anchors provide different paths to a same DN. Therefore, a current protocol provides three MEC connection modes:
**•** Distributed anchor (Distributed Anchor Point): Each PDU session has a local PSA.
**•** Session breakout (Session Breakout): Each PDU session has a local PSA and a central PSA, but only one of the local PSA and central PSA provides an internet protocol (Internet Protocol, IP) anchor. An edge application (Edge app) uses an uplink classifier/branching pointer (Uplink Classifier/Branching Pointer, UL CL/BP) to forward a traffic flow to a local PSA.
**•** Multiple PDU sessions (Multiple PDU sessions): The UE establishes a PDU session of a local PSA for an edge application according to a UE route selection policy (UE Route Selection Policy, URSP).

As described above, regardless of the connection mode, PDU session data transmission between the UE and the DN needs to reach a corresponding MEC server via a corresponding PSA anchor. This means that, in a conventional MEC service mode, a computing service requested by the UE can only reach MEC servers on different DNs by passing through a UPF function/PSA anchor, domain name parsing performed by a domain name server (Domain Name Server, DNS), forwarding performed by a core network function network element, and other processes. Even after multi-MEC server computing is completed, service output data flows need to be forwarded to an aggregation anchor (for example, a master server or a UPF) for combination, and then transmitted to a user. The data flows still need to pass through a core network gateway and a base station. On this basis, if a plurality of base stations further need to jointly transmit service data, a service data flow further needs to be distributed from the UPF to each base station. Therefore, if joint computing and transmission performed by a plurality of MEC nodes are implemented in a conventional PDU session anchor connection mode, input/output data needs to be forwarded by a plurality of gateways or network elements such as UPFs or PSAs, and an interaction delay is affected by multi-hop forwarding.

In view of this, this application proposes an edge computing architecture controlled by the RAN. A computing management function (Computing Management Function, CMF) is added to the RAN side, to perform orchestration and management (orchestration and management) on an edge computing resource. A procedure in which the RAN controls a plurality of MEC nodes to perform joint computing and transmission is further proposed, including: A UE reports computing request information, where the information includes a service type (service ID), a computing power requirement, a quality of service (Quality of Service, QoS) requirement, and the like. The CMF provides information like RNI information and location information of the UE to an App via a local NEF function or a standard API on the RAN side. The CMF entity collects computing power statuses of MECs, and indicates an allocated computing task to each MEC. The CMF sends a joint transmission indication to base stations corresponding to the MECs, where the joint transmission indication includes a time synchronization and content synchronization indication. An access base station forwards UE task data to another base station through an inter-base station interface (for example, an Xn interface), and then transmits the UE task data to a corresponding MEC. The base station performs data packet synchronization based on content/time synchronization indicated by the CMF and a synchronization rule indicated by the CMF. In this manner, this application designs an efficient mechanism for performing joint computing and transmission by a plurality of MEC servers, so that computing data does not need to be detoured via the core network gateway. This reduces the interaction delay.

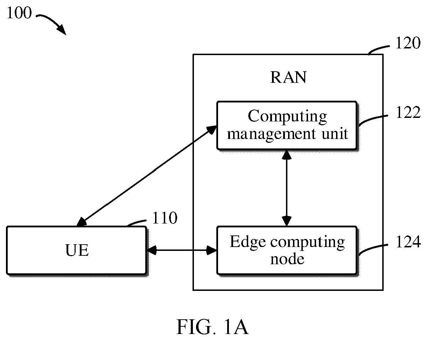

As described above, for a distributed edge computing service requirement brought by offloading third-party applications such as RAN intelligence and VR/cloud gaming, this application proposes a mechanism for performing joint computing and transmission by a plurality of edge nodes, to uniformly, flexibly, and quickly schedule communication and computing resources of all parts of a network. Therefore, overall resource use efficiency of a system is improved. The following describes a basic principle and several example implementations of this application with reference to FIG. 1A to FIG. 12. It should be understood that these example embodiments are provided only to enable a person skilled in the art to better understand and further implement embodiments of this application, but not to limit the scope of this application in any manner. A communication method, a communication apparatus, a communication system, a computer-readable storage medium, a chip, and a computer program product provided in this application are not limited to a 5G network architecture, and are also applicable to any other network architecture that has a communication and computing capability, for example, an LTE network and a future 6G network architecture.

FIG. 1A is a block diagram of a communication system 100 in which an embodiment of this specification can be implemented. A UE 110 is a user equipment (also referred to as a "terminal device"), and may access a network (for example, a radio access network RAN 120). The RAN 120 is a radio access network that provides a connection between a user equipment (for example, the UE 110) and a core network (for example, a 5G core network (5G Core Network, 5GC)). It should be noted that although only one UE 110 and one RAN 120 are shown in the example communication system 100, quantities of UEs 110 and RANs 120 are not limited to those shown in FIG. 1A, in other words, the example communication system 100 may include a plurality of UEs 110 and a plurality of RANs 120. When the plurality of UEs 110 are included, the UEs 110 may be referred to as a UE 110-1, a UE 110-2, ..., and a UE 110-P (where P is a quantity of UEs 110 and P is an integer greater than or equal to 1), and these UEs may also be collectively referred to as the UE 110. Similarly, when the plurality of RANs 120 are included, the RANs 120 may be referred to as a RAN 120-1, a RAN 120-2, ..., and a RAN 120-Q (where Q is a quantity of RANs 120 and Q is an integer greater than or equal to 1), and these RANs may also be collectively referred to as the RAN 120.

As shown in FIG. 1A, the RAN 120 side includes a computing management unit 122 and an edge computing node 124. The computing management unit 122 has a computing management function (Computing Management Function, CMF), and may be implemented as a computing controller or a controller of an edge computing node (for example, the edge computing node 124 or a MEC). It should be noted that, although only one computing management unit 122 and one edge computing node 124 are shown on the RAN 120 side, quantities of computing management units 122 and edge computing nodes 124 are not limited to those shown in FIG. 1A, in other words, the RAN 120 side may include a plurality of computing management units 122 and a plurality of edge computing nodes 124. When the plurality of edge computing nodes 124 are included, the edge computing nodes 124 may be respectively referred to as an edge computing node 124-1, an edge computing node 124-2, ..., and an edge computing node 124-N (where N is a quantity of edge computing nodes 124 on the RAN 120 side, and N is an integer greater than or equal to 1), and these edge computing nodes 124 are collectively referred to as the edge computing node 124. The following uses an example in which the RAN 120 side includes one computing management unit 122 and N edge computing nodes 124 for description. However, a person skilled in the art understands that this is merely for ease of description, and should not be construed as any limitation on this application.

The computing management unit 122 and the edge computing node 124 may perform bidirectional communication. The computing management unit 122 and the edge computing node 124 may also separately perform bidirectional communication with the UE 110. For example, the edge computing node 124 may send capability information to the computing management unit 122. The capability information may include at least one of computing capability information, service capability information, or communication capability information. The UE 110 may send a computing request (for example, for a computing task) to the computing management unit 122. The computing management unit 122 determines, (for example, based on at least one of the capability information and the computing request), an available computing resource of the N edge computing nodes 124, and determines allocation of the computing task to the N edge computing nodes 124 based on the available computing resource. Further, based on the allocation, the computing management unit 122 sends, to the edge computing node 124, allocation indication information indicating the allocation, and sends a computing request response to the UE 110. For example, the computing request response may include at least one of the following: information about a plurality of subtasks of the computing task; information about allocation of the plurality of subtasks to M edge computing nodes; or a transmission manner of a computing result of each of a plurality of subtasks, where M is an integer greater than or equal to 1, and M is less than or equal to N.

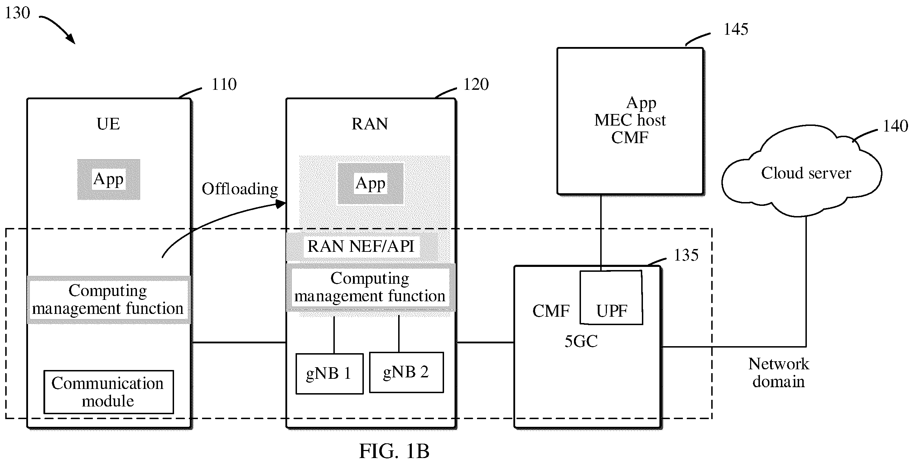

FIG. 1B shows a possible structure of the communication system 100 shown in FIG. 1A. FIG. 1B is another block diagram of a communication system 130 in which an embodiment of this specification can be implemented. As shown in FIG. 1B, an edge computing architecture (also referred to as a radio computing power network architecture) controlled by a RAN is shown in the example communication system 130. In comparison with a conventional MEC architecture, in the embodiment shown in FIG. 1B, the RAN 120 controls the edge computing architecture, a computing management function is integrated on a UE 110 side and the RAN 120 side, and the computing management function is embedded in a RAN function. An application (App) runs on the RAN 120, and secure exposure of a capability of the RAN 120 to the App is supported. The App is software that provides a function required by a service, and may be installed and deployed by a device vendor, an operator, or a third party.

As shown in FIG. 1B, an application is installed in the UE 110, and a computing management function is configured in the UE 110. The UE 110 includes a communication module, and may communicate with the RAN 120 side via the communication module. It may be understood that there may be a plurality of UEs 110 in the communication system 130. The plurality of UEs 110 may offload computing power from each other. For example, UEs of family members may be connected to each other. When a computing amount of a computing task of a UE is large, the computing task of the UE may be offloaded to a UE of another family member, and the UE of the another family member obtains a computing result through computing and then send the computing result to the UE. Alternatively, when a computing amount of a computing task of a UE of another family member is large, a UE may receive a part or all of the computing task from the UE of the another family member, obtain a computing result through computing, and send the computing result to the UE of the another family member.

The RAN 120 side provides a connection between the UE 110 and a 5G core network (5G core network, 5GC) 135. As shown in FIG. 1B, the UE 110 is connected to the 5GC 135 via the RAN 120. Specifically, the UE 110 is connected to the 5GC 135 via a gNB (gNodeB, that is, a 5G base station) on the RAN 120 side. The gNB is an interface device for a mobile device (like the UE 110) to access an internet. As a gNB, a gNB 1 and a gNB 2 in the RAN 120 are shown in FIG. 1B. The gNB may also be configured with a computing management function, and an application may also run in the gNB. For example, in the embodiment shown in FIG. 1B, applications may alternatively run in the gNB 1 and the gNB 2. As shown in FIG. 1B, the UE 110 may offload a computing task of the UE 110 to the RAN 120 side.

A network exposure function (Network Exposure Function, NEF) on the RAN 120 side shown in FIG. 1B is an adaptation layer for interaction between a network (for example, the RAN 120) and an application. For example, the network provides radio network information (RNI) for the App via the adaptation layer.

The 5GC 135 may include an access and mobility management function (Access and Mobility Management Function, AMF), a session management function (Session Management Function, SMF), and a UPF function. As shown in FIG. 1B, the 5GC 135 may also be configured with a computing management function (CMF).

In the communication system 130, the 5GC 135 may further communicate with a cloud server 140. For example, various AI models are stored in the cloud server 140, and the 5GC 135 may download a suitable AI model from the cloud server 140.

The 5GC 135 may further communicate with a MEC host 145. The MEC host 145 or a MEC configuration server may be configured with a computing management function (CMF), and an application may also run in the MEC host 145. For example, the 5GC 135 may communicate with the MEC host 145 via the UPF function of the 5GC 135.

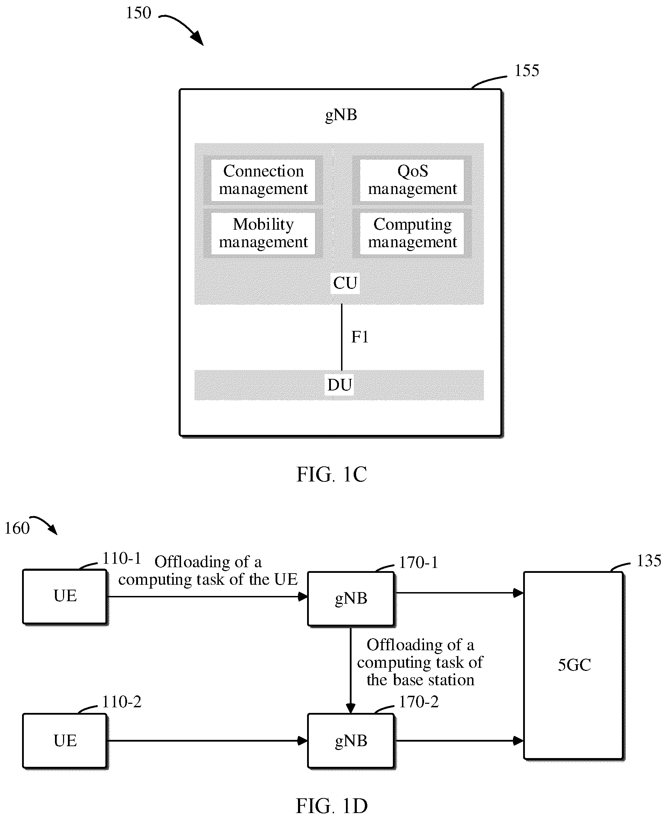

The embodiment shown in FIG. 1B provides the edge computing architecture or the radio computing network architecture controlled by the RAN, and the computing management function (CMF) is integrated on the UE 110 side and the RAN 120 side. On the RAN 120 side, as shown in FIG. 1B, the CMF function and various applications Apps may be deployed together, so that the CMF function and the various applications Apps form an edge computing controller (MEC Controller). Alternatively, the CMF function and an application App may be deployed separately. The CMF may be used as an independent logical function on the gNB side, or may be embedded into an integrated gNB, a gNB-CU (Central Unit, central unit), or another RAN side network element, as shown in FIG. 1C. An application App may be deployed in an independent edge computing resource on the gNB side, or may be deployed in an integrated gNB, a gNB-CU, or another RAN side network element. The CMF function and/or an application App may alternatively be deployed on a core network side or a MEC platform.

The CMF supports registration, management, discovery, and update of an application App (including a RAN intelligence application), and distributed/centralized management, allocation, migration, or offloading of a computing task. The CMF further supports offloading of a computing task between UEs, and supports offloading of a computing task to a wireless backhaul network node like IAB (Integrated Access and Backhaul, integrated access and backhaul).

The CMF further supports capability exposure of the RAN 120. A local NEF function or a standard API on the RAN 120 side is used to provide information such as radio network information (RNI) and location information of the UE 110 for an App, and perform API release and RNI access management.

According to this application, control plane signaling transmission is introduced for all CMF functions and messages such as signaling and service data transmitted by an application App in the communication system 130. For example, based on a conventional RAN protocol stack, an edge computing control (Edge Computing Control, ECC) protocol layer is introduced, and information exchanged between a base station, a CMF, and an App is uniformly changed to control plane signaling, and is carried in an ECC message.

In this architecture, the application App runs on the RAN and accesses RAN data through the standard API. An access process is recorded, and the App does not have permission to "write" data to an external network. Therefore, there is no data leakage risk.

FIG. 1C is a diagram of an embedded computing management function according to an embodiment of this application. As shown in FIG. 1C, a computing management function is embedded in a gNB included in a RAN (for example, a gNB central unit (gNB-CU)). In other words, the gNB-CU module may integrate the computing management function.

As described above, the RAN 120 controls an edge computing architecture, a computing management function is integrated on a UE 110 side and the RAN 120 side, an application App runs on the RAN 120, and a capability of the RAN 120 is supported to be securely exposed to the App. Therefore, the RAN-controlled computing power network architecture in this embodiment can implement many beneficial technical effects. For example, no conventional core network function, MEC host, and MEC configuration server needs to be additionally deployed, so that joint computing between edge computing nodes can be simplified. In addition, RAN AI computing and application App computing may be further uniformly designed to simplify a system and reduce costs. In addition, the RAN 120 side controls capability exposure of the RAN 120, so that there is no security risk. When the App runs on the RAN 120, a leakage risk can also be avoided. Therefore, running security of the App is improved. In addition, the App can further optimize service experience based on radio network information.

FIG. 1D is a block diagram of computing task downloading in a communication system 160 according to an embodiment of this application. As shown in FIG. 1D, two UEs (respectively denoted as a UE 110-1 and a UE 110-2), two gNBs (respectively denoted as a gNB 170-1, and a gNB 170-2) corresponding to the two UEs, and a 5GC 135 separately connected to the two gNBs, are shown in the example communication system 160. A person skilled in the art understands that quantities of UEs and gNBs in the communication system 160 are not limited thereto, and may be any suitable quantity. In addition to the apparatuses or elements shown in FIG. 1D, the communication system 160 may further include another apparatus or element.

The UE may offload a computing task to the gNB on a RAN side. As shown in FIG. 1D, the UE 110-1 may offload a computing task to the gNB 170-1 to which the UE 110-1 is connected. Similarly, the UE 110-2 may also offload a computing task to the gNB 170-2 to which the UE 110-2 is connected. As described above, the UE 110-1 and the UE 110-2 may also offload computing tasks to each other (not shown in this figure).

In addition, the gNBs on the RAN side can also offload computing tasks to each other. As shown in FIG. 1D, the gNB 170-1 may offload a computing task to the gNB 170-2.

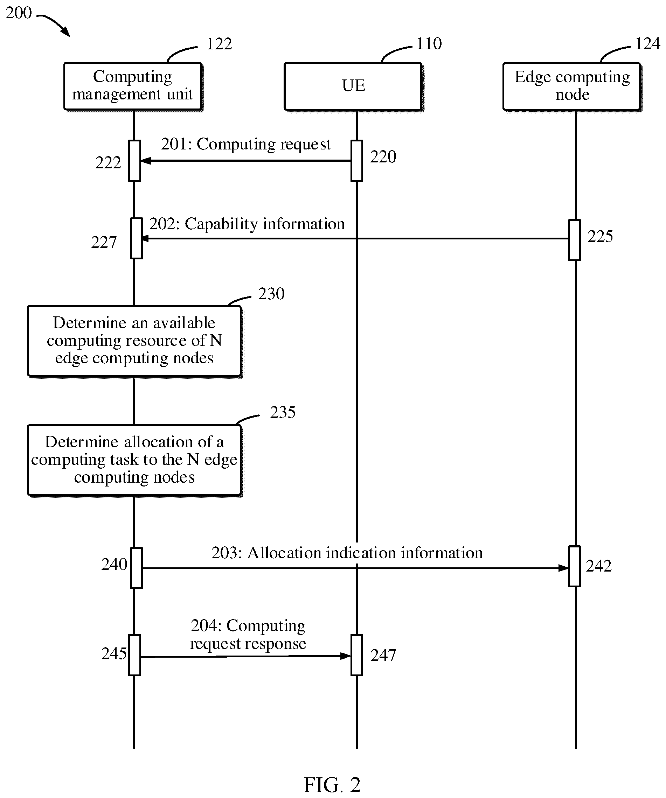

FIG. 2 is a diagram of signaling exchange in a communication process 200 according to some embodiments of this application. For ease of description, the communication process 200 is described with reference to FIG. 1A, FIG. 1B, and FIG. 1C. The communication process 200 relates to a computing management unit 122, a UE 110, and an edge computing node 124. The computing management unit 122 and the edge computing node 124 are located on a RAN side. The computing management unit 122 may alternatively be located on a core network. The edge computing node 124 may include at least one of the following: a base station, another user equipment, a MEC platform, a core network function, or a wireless backhaul network node.

As shown in FIG. 2, in the communication process 200, the terminal device (UE) 110 sends (220) a computing request 201 to the computing management unit 122. For example, a local App of the UE 110 needs to perform a large amount of computing. Therefore, the UE 110 offloads a computing task to the RAN side by using the computing request 201, as shown in FIG. 1A and FIG. 1B. At the same time, the computing request 201 is received (222) on the other side of communication (namely, at the computing management unit 122). The computing request 201 may include at least one of a service type, a computing power requirement, or a communication requirement, and may further include information related to a subtask decomposed from the computing task. The service type may include at least one of a service type identifier or an application ID. The computing power requirement may include at least one of a processor type, a processor quantity, a processor dominant frequency, or a processor operation capability. The communication requirement may include at least one of a data transmission bit rate, a data transmission throughput, a data packet transmission delay, data transmission reliability, or a 5G quality of service indicator defined by a 5GS. In addition, it should be noted that, an example in which one UE 110 sends (220) the computing request 201 to the computing management unit 122 is used herein for description. Alternatively, a plurality of UEs may send computing requests to the computing management unit 122. For example, in a scenario in which a plurality of UEs are playing a game online, the plurality of UEs may jointly send computing requests to the computing management unit 122.

The edge computing node 124 sends (225) capability information 202 to the computing management unit 122. The capability information 202 includes at least one of computing capability information, service capability information, or communication capability information. The computing capability information includes device capability information of the edge computing node 124, for example, a processor model, a processor processing speed, a memory size, and a processor read/write (I/O) capability, which may be used to measure a computing amount that can be currently undertaken by the edge computing node 124, in other words, a quantity of computing tasks that can be undertaken by the edge computing node 124. The service capability information includes, for example, a type/identifier of a service/business that can be provided by the edge computing node 124, a quantity of currently available process resources, and an estimated service delay of each type of service. The communication capability information includes quality/status of a connection between the edge computing node 124 and the UE 110, uplink and/or downlink channel state information, a transmission rate, and available uplink and/or downlink bandwidth, and may further include a communication capability, for example, a transmission rate, available uplink and/or downlink bandwidth, quality/status of a connection, a transmission rate, and available bandwidth, reserved for the UE 110 on an interface between edge computing nodes 124. The capability information 202 is received (227) on the other side of the communication (namely, at the computing management unit 122).

In a block 230, the computing management unit 122 determines an available computing resource of N edge computing nodes. As described above, N is an integer greater than or equal to 1. Herein, the edge computing node 124 is one of the N edge computing nodes. In a block 235, the computing management unit 122 determines allocation of the computing task to the N edge computing nodes based on the available computing resource. For example, the computing management unit 122 may select M edge computing nodes from the N edge computing nodes based on at least one of the capability information or the computing request, where M is an integer greater than or equal to 1, and M is less than or equal to N. Then, the computing management unit 122 determines allocation of the computing task to the M edge computing nodes.

After the allocation of the computing task to the N edge computing nodes is determined, the computing management unit 122 sends (240) allocation indication information 203 to the N edge computing nodes, for example, sends (240) to the edge computing node 124. The allocation indication information 203 is received (242) on the other side of the communication (namely, at the edge computing node 124). For example, the allocation indication information may include information about one or more subtasks of the computing task, and information about allocation of the one or more subtasks to the M edge computing nodes. Additionally or alternatively, the allocation indication information may include a set including a number of the one or more subtasks of the computing task, and an association relationship between the one or more subtasks and the M edge computing nodes, where the association relationship indicates a specific edge computing node in the M edge computing nodes that completes the one or more subtasks or specific edge computing nodes that repeatedly complete the one or more subtasks.

In addition, after the allocation of the computing task to the N edge computing nodes is determined, the computing management unit 122 further sends (245) a computing request response 204 to the UE 110, where the computing request response 204 is a response to the computing request 201. The computing request response 204 is received (247) on the other side of the communication (namely, at the UE 110). The computing request response 204 may include at least one of the following: information about a plurality of subtasks of the computing task; information about allocation of the plurality of subtasks to the M edge computing nodes; or a transmission manner of a computing result of each of a plurality of subtasks.

In some embodiments, the UE 110 may offload the computing task to the M edge computing nodes in response to the computing request response 204. Specifically, the UE 110 may upload to-be-computed data to the M edge computing nodes, and receive, from the M edge computing nodes, a computing result corresponding to the to-be-computed data. On the other side of the communication (namely, for example, at the edge computing node 124), the to-be-computed data of the one or more subtasks from the UE 110 may be received, and the computing result corresponding to the to-be-computed data may be sent to the UE 110. For example, the UE 110 may upload the to-be-computed data to a first edge computing node in the M edge computing nodes, and then the first edge computing node forwards the to-be-computed data to another edge computing node in the M edge computing nodes, to upload the to-be-computed data to the M plurality of edge computing nodes. In other words, the edge computing node 124 may directly receive the to-be-computed data from the UE 110, or the edge computing node 124 may receive the to-be-computed data from another edge computing node 124 that directly receives the to-be-computed data. Alternatively, the edge computing node 124 may send, to another edge computing node 124 that participates in computing of the to-be-computed data, the to-be-computed data directly received from the UE 110.

In some embodiments, the UE 110 may receive, from the M edge computing nodes, the computing result jointly backhauled by the M edge computing nodes, to receive the computing result from the M edge computing nodes.

In some embodiments, the computing management unit 122 may further send a joint transmission indication to the M edge computing nodes 124, where the joint transmission indication indicates one or more groups of edge computing nodes including one or more of the M edge computing nodes to jointly send the computing result of the one or more subtasks to the UE 110. The joint transmission indication may further indicate the one or more groups of edge computing nodes to perform time synchronization and/or content synchronization on the computing result of the one or more subtasks. For example, the joint transmission indication may include number information of the one or more subtasks corresponding to the jointly transmitted computing result, information about an edge computing node associated with the one or more subtasks, and information about a position of a time-frequency resource used to perform joint transmission of the computing result. For example, the joint transmission indication may indicate specific edge computing nodes to perform coherent joint transmission/non-coherent joint transmission on an air interface after completing specific subtasks.

In some embodiments, after receiving the joint transmission indication from the computing management unit 122, the edge computing node 124 may synchronize, based on the joint transmission indication, the computing result with another edge computing node 124 that receives the joint transmission indication. Alternatively, the edge computing node 124 may synchronize the computing result by negotiating with another edge computing node 124 that receives the joint transmission indication.

In some embodiments, to send the computing result to the UE 110, the edge computing node 124 and the another edge computing node may jointly transmit, to the UE 110, a synchronized (synchronized through at least one of the time synchronization or the content synchronization) computing result. For example, specifically, the edge computing node 124 and the another edge computing node may jointly transmit the computing result in at least one of the following joint transmission manners: a coherent joint transmission manner, a non-coherent joint transmission manner, or a combination thereof.

In some embodiments, the computing management unit 122 may be independent of the edge computing node 124. In some other embodiments, the computing management unit 122 may be included in a base station. For example, the computing management unit 122 may be included in a central unit (Central Unit, CU) of the base station, or may be integrated in an NRT-RIC or a Non-RT RIC of the base station. Alternatively, the computing management unit 122 integrates an NRT-RIC or a Non-RT RIC in the base station, and runs a third-party application App.

In some embodiments, the computing management unit 122 may further perform at least one of the following operations: at least one of registration, management, discovery, and update of an application App running on the N edge nodes; at least one of distributed or centralized management, allocation, migration, or offloading of a computing task; providing radio network information (RNI) and location information of a user equipment for an application App; performing application programming interface (API) release and RNI access management; or interacting, by using control plane signaling or user plane signaling with at least one of the following: the N edge computing nodes, the UE 110, an application App running on the N edge computing nodes, or an application App running on the UE 110. The interacting, by using the control plane signaling or the user plane signaling, with at least one of following: the N edge computing nodes, the UE 110, the application App running on the N edge computing nodes, or the application App running on the UE 110 may include: implementing, by using the control plane signaling of the radio access network, mapping of computing-related "data" to a specific signaling radio bearer (signaling radio bearer, SRB), and "addressing" (referred to as address querying, during which a logical entity can be found/discovered) to a specific edge computing node, and/or a specific UE, and/or a specific App. The control plane signaling of the radio access network may be a message of a separate protocol layer of the radio access network. For example, a computing resource control (computing resource control, CRC) layer may be added above an RRC layer, and the control plane signaling is implemented by using a message of the CRC layer. Alternatively, the control plane signaling may be embedded in a message of a protocol layer of the radio access network. For example, the control plane signaling may be embedded in a message of an RRC layer. Alternatively, locally established user plane signaling of the radio access network may be used to implement mapping of computing-related "data" to a locally established specific data radio bearer (data radio bearer, SRB), and/or implement "addressing" to a specific edge computing node, and/or a specific UE, and/or a specific App. Similarly, the application App running on any one of the N edge computing nodes or the application App running on the UE 110 may also interact, by using control plane signaling or user plane signaling, with at least one of the following: the N edge computing nodes, the UE 110, another application App running on the N edge computing nodes, or another application App running on another UE. Optionally, the computing-related "data" may be a message that is of the computing management unit and that is used for control, management, orchestration, and the like, and/or a service data message of an application App. Optionally, the user plane signaling may be transmitted via a locally established UPF function.

It should be noted that the communication process 200 is described according to the foregoing sequence, but a sequence of the steps in the communication process 200 is not limited to that shown in FIG. 2. A sequence of some steps may be reversed, or some steps may be performed at the same time. For example, alternatively, the edge computing node 124 may first send (225) the capability information 202 to the computing management unit 122, and the UE 110 may then send (220) the computing request 201 to the computing management unit 122. For another example, alternatively, the computing management unit 122 may first send (245) the computing request response 204 to the UE 110, and then send (240) the allocation indication information 203 to the edge computing node 124.

According to the foregoing technical solution, a solution in which a CMF function locally controls the edge computing node 124 to perform joint computing and task allocation is simple and convenient, and no conventional core network function, MEC host, and MEC configuration server needs to be additionally deployed. This can simplify joint computing between edge computing nodes 124, so that a data forwarding delay is reduced, and use efficiency of edge computing is improved. RAN AI computing and application App computing may be further uniformly designed to simplify a system and reduce costs. In addition, the RAN controls capability exposure of the RAN, so that there is no security risk. An App runs on the RAN (for example, on an open RIC module) and is not exposed to a security risk due to an external factor. Therefore, a leakage risk can be avoided and security is higher. In addition, the App may optimize service experience based on the radio network information. In addition, the CMF on the RAN side controls a plurality of edge computing nodes to perform joint transmission, so that a physical layer transmission rate and physical layer transmission reliability can be effectively improved, and traffic steering via a user plane anchor is not needed. In addition, an edge computing architecture may be combined with an O-RAN architecture, so that the O-RAN architecture and interface are slightly changed. This is easy to implement.

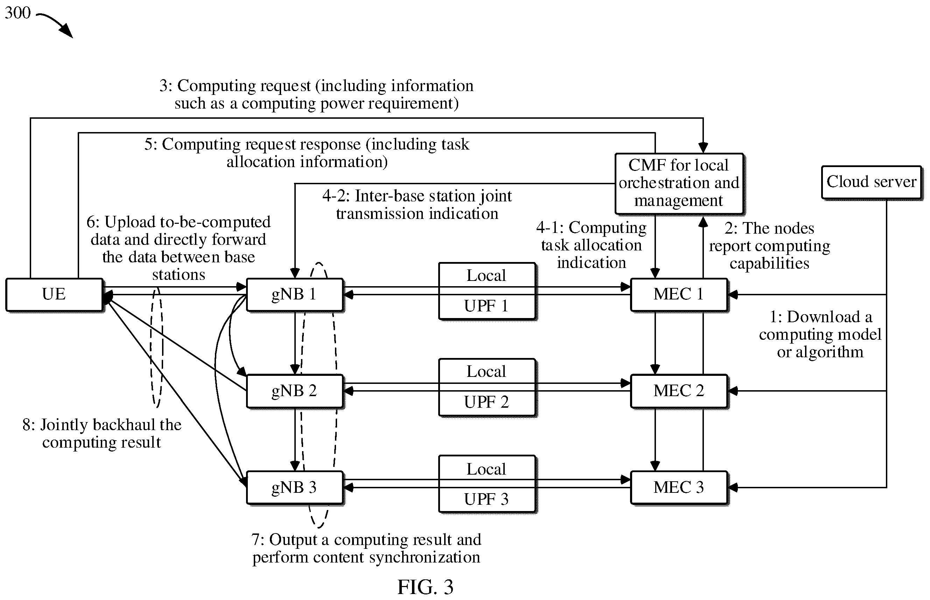

FIG. 3 is a diagram of a procedure 300 of performing joint computing and transmission by a plurality of MECs according to an embodiment of this application. Based on the RAN-controlled edge computing architectures shown in FIG. 1A and FIG. 1B, the embodiment shown in FIG. 3 shows a procedure 300 in which a CMF controls a plurality of edge computing nodes (specifically, MEC nodes) to perform joint computing and transmission. As edge computing nodes (for example, the edge computing node 124 shown in FIG. 1A, FIG. 1B, and FIG. 2), FIG. 3 shows three MEC nodes, namely, a MEC 1, a MEC 2, and a MEC 3. FIG. 3 further shows local UPFs (namely, a local UPF 1, a local UPF 2, and a local UPF 3) and gNBs (namely, a gNB 1, a gNB 2, and a gNB 3) corresponding to the three MEC nodes. However, a person skilled in the art understands that quantities of MECs, local UPFs, and gNBs in this example embodiment are merely provided for illustrative purposes, and do not have any meaning of limitation. Actually, quantities of edge computing nodes (for example, MECs), corresponding local UPFs, and corresponding gNBs that are related to the procedure 300 in which the CMF controls the plurality of edge computing nodes to perform joint computing and transmission are not limited to 3, or may be any suitable quantity like 2 or more than 3. In addition, in this embodiment, a MEC node may be a conventional independently deployed MEC App server or a computing controller, or may be a baseband processing unit (Baseband Unit, BBU), a baseband board, or a computing power board in a base station. This is not limited in this application.

In the procedure 300 of performing joint computing and transmission by the plurality of MECs shown in FIG. 3, in step 1, the MEC nodes, namely, the MEC 1, the MEC 2, and the MEC 3, configure computing services. For example, the MEC nodes, namely, the MEC 1, the MEC 2, and the MEC 3, may configure the computing services offline. Specifically, the MEC nodes, namely, the MEC 1, the MEC 2, and the MEC 3, may download, from a cloud server in an offline mode, a computing model or a computing algorithm (for example, an AR/VR rendering algorithm and an AR/VR rendering database) for executing a computing task.

In step 2, the CMF on a RAN obtains computing capability information of the MEC nodes and communication capability information of the base stations (for example, the gNB 1, the gNB 2, and the gNB 3 shown in FIG. 3). For example, each MEC node may periodically report a computing capability, a current computing status, and an available computing resource. The computing capability specifically includes, for example, device capability information of the edge computing node 124, for example, a processor model, a processor processing speed, a memory size, and a processor read/write (I/O) capability, or may include service capability information, for example, a type/identifier of a service/business that can be provided, a quantity of currently available process resources, and an estimated service delay of each type of service.

For another example, each MEC may trigger reporting of computing status information based on a running status of the computing task. Alternatively, the CMF on the RAN may actively initiate a computing capability/status query process to the MEC node. In addition, the CMF may further obtain communication capability information of each base station and a UE (for example, the UE 110 shown in FIG. 1A, FIG. 1B, and FIG. 2). The communication capability information may include: quality/status of a connection between the edge computing node and the UE, uplink and/or downlink channel state information, a transmission rate, and available uplink and/or downlink bandwidth. The communication capability information may further include a communication capability, including a transmission rate, available uplink and/or downlink bandwidth, quality/status of a connection, a transmission rate, and available bandwidth, reserved for the UE on an interface between edge computing nodes 124.

In step 3, the UE initiates a computing service request to the CMF functional entity, where computing request information includes information such as a service type (service Type), a computing power requirement, or a communication requirement. The computing power requirement may be indicated as a processor type, a processor dominant frequency, and a processor operation capability. For example, eight GPUs of a specific model, a computing chip with a dominant frequency of 100 GHz, or an operation capability of 200 TFLOPS is required. The computing power requirement may alternatively be indicated based on different rendering degrees. For example, game picture quality is a picture effect formed by arranging and combining GPU operation instructions. Rendering degrees required by components or effects such as running, shooting, explosion, and attack special effects in a game picture are different. Resolution, a frame rate, a model, sawtooth, shadows, light and shadows, mapping precision, and the like all affect a final display effect of the picture quality. The communication requirement may be indicated as indicators such as a data transmission bit rate, a data transmission throughput, a data packet transmission delay, and data transmission reliability, or a 5QI parameter (5G QoS identifier, 5G QoS identifier) defined by a 5GS.

The computing request information may further be described based on a granularity of a subtask, and directly carry description information of a subtask decomposed from the computing task. Specifically, in one manner, the UE divides the computing task to obtain (a plurality of) subtasks, and the computing request information is described in a manner of the subtasks. The subtask may further include information about various components, and different components may have different computing power requirements. Game picture rendering is used as an example. The UE may notify the CMF of computing amounts corresponding to rendering degrees of the various components, and include the computing amounts in a computing service request message, for example, {subtask 1 description, subtask 2 description, ...}, to perform subtask scheduling. Alternatively, the UE offloads the entire computing task to the RAN side; and the CMF divides the computing task to obtain (a plurality of) subtasks, and then allocates these subtasks to edge computing nodes (for example, MEC nodes). Details are described below.

In step 4-1, the CMF on the RAN determines a set of MEC nodes participating in joint computing and a set of computing tasks/subtasks allocated to each MEC, and then sends task allocation indication information to a corresponding MEC. For example, the indication information may be an association relationship between a subtask number set and a base station, and the CMF determines subtask information based on the computing request information received in step 3. Alternatively, the computing task may not be decomposed by the UE, but the computing task may be decomposed by the CMF to determine subtask information.

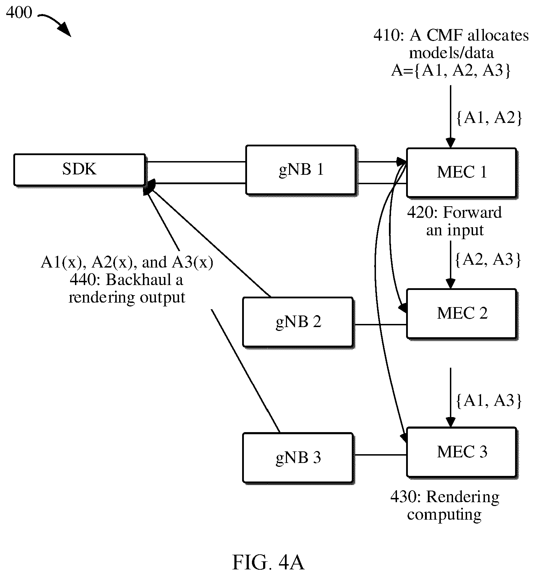

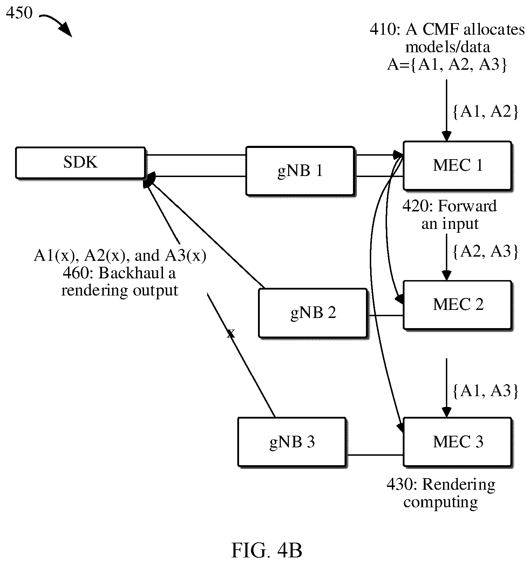

In addition, in step 4-2, the CMF sends a joint transmission indication to base stations corresponding to the MECs, to indicate specific base stations to perform coherent joint transmission/non-coherent joint transmission (Coherent Joint Transmission/Non-Coherent Joint Transmission, CJT/NCJT) on an air interface after completing computing of specific subtasks. For example, specifically, for computing data of one or more subtasks k (≥1), the CMF indicates a base station in a set A to perform CJT transmission, and/or a time-frequency resource on which CJT transmission is performed. For example, time-frequency position indication information includes a sending time periodicity, specific frequency resource blocks (Resource Block, RB) to be used, a quantity of occupied OFDM (Orthogonal Frequency Division Multiplexing) symbols, and a time start location (or an offset relative to a start moment at which a system frame number is 0, or a slot or a subframe is 0). The foregoing information may be obtained by the CMF through estimation based on a computing capability and a communication capability of each node. Additionally or alternatively, for computing data of one or more subtasks k' (≥1), the CMF indicates a base station in a set B to perform NCJT transmission, and/or a time-frequency resource on which NCJT transmission is performed. The set A indicates a set of base stations that perform the CJT transmission, and the set B indicates a set of base stations that perform the NCJT transmission. The CJT transmission and the NCJT transmission are described in the following with reference to FIG. 4A and FIG. 4B.

In step 5, the CMF on the RAN returns computing request response information to the UE, where the computing request response information includes computing task allocation information in step 4.

In step 6, the UE sends, to a serving base station (that is, an access base station and the CMF function that process a UE request) or a MEC based on the computing task allocation information delivered by the CMF in step 4, input data corresponding to the computing task or a subtask. The serving base station forwards, through an Xn interface, the input data to another base station that participates in computing, and the another base station further transmits the input data to a corresponding MEC. Alternatively, input data is sent to another base station participating in computing through an interface between MECs, and is further transmitted to a corresponding MEC. The input data forwarded to each base station and each MEC may be completely the same, partially the same, or completely different. For example, for a VR application, the input information may be a multi-modal input operation instruction such as a human body action/posture, a location, a touch sensation, and a picture/video. For an AR application, the input information may be a to-be-rendered picture/video, or preprocessed data (structured feature data that is sensed and recognized).

In step 7, after completing the computing task, each MEC node sends a computing result to a corresponding base station. Based on the joint transmission indication delivered by the CMF to the MEC or the base station in step 4, the base station or the MEC performs time synchronization and content synchronization preprocessing on the computing result.

Specifically, for time synchronization, the base station or the MEC adds a timestamp to an output data packet that is of a subtask and that needs CJT or NCJT transmission, so that a bottom-layer transmit unit of the base station performs the CJT/NCJT transmission based on the timestamp of the data packet, and completes sending before a moment indicated by the timestamp. A data packet that exceeds the timestamp may be discarded. In addition, in addition to a case that the CMF indicates information about a time-frequency position on which base stations/MECs perform joint transmission, the base stations may also negotiate with each other to determine a time-frequency resource position on which CJT/NCJT transmission is performed. For example, the time-frequency position indication information includes the sending time periodicity, the specific frequency resource blocks (Resource Block, RB) to be used, the quantity of occupied OFDM (Orthogonal Frequency Division Multiplexing) symbols, and the time start location (or the offset relative to the start moment at which the system frame number is 0, or the slot or the subframe is 0).

For content synchronization, the content synchronization needs to be performed when the base stations perform the CJT transmission. A content synchronization indication may be indicated by the CMF in step 4, may be sent by the UE in step 6, or may be directly indicated with the help of the MEC in step 7, to indicate the base stations to maintain a same physical layer bit flow at the same time. A specific indication operation may be: The base stations keep protocol configurations from an SDAP (Service Data Adaptation Protocol, service data adaptation protocol) layer to a MAC (Media Access Control, media access control) layer basically consistent, where the protocol configuration includes content of an added data packet header, an encryption scheme, a scheduling and sending status, and the like.

If some MEC nodes encounter a straggler (straggler) phenomenon, in other words, an execution process is severely lagged behind that of another node, or a computing error or a computing failure occurs, the CMF may indicate a node that has completed the computing task to perform new joint transmission. As shown in FIG. 4B, the MEC 3 cannot compute output data in a timely manner, and the CMF or the MEC 1 and the MEC 2 indicate the gNB 1 and the gNB 2 to jointly transmit all sub-results. In other words, the gNB 1 and the gNB 2 jointly transmit A2(x) in a CJT manner, and jointly transmit A1(x) and A3(x) in an NCJT manner. This case is further described in the following with reference to FIG. 4B. If a quantity of edge computing nodes that encounter the computing failure exceeds a specific threshold, the CMF re-initiates a computing service and/or the CMF returns a computing service failure to the UE.

In step 8, the base stations (specifically, the gNB 1, the gNB 2, and the gNB 3) perform joint transmission on the air interface according to a time synchronization and content synchronization rule, and feeds back the computing result to the UE. For a precoding scheme used for the CJT transmission and the NCJT transmission, refer to a general technology. Details are not described herein again.

In this application, the MEC node may include a MEC application server and a computing controller, or may include any suitable node that has a computing power (in other words, a "computing capability"), for example, a baseband processing unit (Baseband Unit, BBU), a baseband board, or a computing power board in a base station, a cloud-native (cloud-native) RAN node, a service-oriented RAN node, a core network function network element (for example, an NWDAF (Network Data Analytics Function, network data analytics function)), or a terminal device (for example, the UE 110).

The procedure 300 of performing joint computing and transmission by the plurality of MEC nodes is described in the foregoing sequence. However, a person skilled in the art understands that, in the foregoing procedure 300 of performing joint computing and transmission by the plurality of MEC nodes, some steps may be omitted or other steps may be added based on a specific case. In addition, an execution sequence of the steps is not limited to the sequence described above, and some steps may be executed in a reverse order or in parallel.

In comparison with a computing procedure in a conventional MEC architecture and a conventional cross-base station joint transmission mechanism, the technical solution in this embodiment proposes a mechanism for performing joint computing by a plurality of MECs based on RAN local orchestration and management, to avoid multi-hop forwarding and detouring via a core network gateway, and reduce an unnecessary user plane forwarding delay; and further proposes a mechanism that is for performing joint transmission by a plurality of base stations and that is adapted to the joint computing performed by the plurality of MECs, to avoid a process of data flow traffic steering across base stations in the conventional mechanism, and further improve joint transmission efficiency and data transmission reliability. According to the technical solution in this embodiment, a solution in which the CMF function on the RAN side locally controls a plurality of MEC nodes to perform joint computing and task allocation is simple and convenient, so that a data forwarding delay can be reduced and use efficiency of the MEC node can be improved. In addition, the CMF on the RAN side controls a plurality of base stations to perform joint transmission, so that a physical layer transmission rate and physical layer transmission reliability can be effectively improved, and traffic steering via a user plane anchor is not needed. Therefore, this helps implement synchronous transmission of the computing result to the UE 110, and improves experience of offloading the computing task.

FIG. 4A is a diagram of a procedure 400 of performing joint rendering and transmission by a plurality of MECs according to an embodiment of this application. The procedure 400 of performing joint rendering and transmission by the plurality of MECs uses a distributed video rendering service request as an example to describe a joint computing and transmission solution. The embodiment shown in FIG. 4A is described with reference to FIG. 3.

It is assumed that a rendering model includes three submodels, that is, A={A1, A2, A3}. A CMF determines that MECs (namely, the MEC 1, the MEC 2, and the MEC 3 shown in FIG. 3) corresponding to three base stations, namely, a gNB 1, a gNB 2, and a gNB 3 jointly complete rendering. In step 410, the CMF respectively allocates rendering models {A1, A2}, {A2, A3}, and {A1, A3} to these MECs. In other words, the CMF allocates rendering models {A1, A2} to the MEC 1, allocates rendering models {A2, A3} to the MEC 2, and allocates rendering models {A1, A3} to the MEC 3. It can be learned that in this allocation manner, the rendering models allocated to the MECs are partially repeated. For example, the rendering model A2 allocated to the MEC 1 and the MEC 2 is repeated, the rendering model A3 allocated to the MEC 2 and the MEC 3 is repeated, and the rendering model A1 allocated to the MEC 1 and the MEC 3 is repeated. In step 420, a UE 110 sends to-be-rendered data (input data) X to the MEC 1 via the base station gNB 1, and then the MEC 1 forwards the to-be-rendered data to the MEC 2 and the MEC 3. In step 430, the MEC 1, the MEC 2, and the MEC 3 separately perform rendering computing on the to-be-rendered data X sent by the UE. In step 440, the MEC 1, the MEC 2, and the MEC 3 send rendering computing results to the UE 110 through an air interface, and the UE 110 combines the rendering results to obtain a final rendering result A(X). Because content rendered by the nodes is partially repeated, there are a plurality of joint transmission manners. For example, in a CJT manner, the gNB 1 and the gNB 2 may jointly transmit A2(x), the gNB 2 and the gNB 3 may jointly transmit A3(x), and the gNB 1 and the gNB 3 may jointly transmit A1(x). Alternatively, for example, the gNB 1, the gNB 2, and the gNB 3 may simultaneously transmit A1(x), A2(x), and A3(x) in an NCJT manner. A plurality of antennas need to be configured for the UE and the base stations, namely, the gNB 1, the gNB 2, and the gNB 3.

FIG. 4B is a diagram of a procedure 450 of performing joint rendering and transmission by a plurality of MEC nodes according to an embodiment of this application. The procedure 450 of performing joint rendering and transmission by the plurality of MEC nodes uses a distributed video rendering service request as an example to describe a joint computing and transmission solution. The embodiment shown in FIG. 4B is described with reference to FIG. 3 and FIG. 4A. The embodiment shown in FIG. 4B is different from the embodiment shown in FIG. 4A only in step 460. Therefore, only step 460 different from the embodiment shown in FIG. 4A is described. For steps 410, 420, and 430 that are the same as those in the embodiment shown in FIG. 4A, refer to the descriptions of the embodiment shown in FIG. 4A. Therefore, details are not described herein again.

In step 460, if some MEC nodes (for example, the MEC 3 in FIG. 4A and FIG.4B) encounter a straggler (straggler) phenomenon, in other words, an execution process is severely lagged behind that of another node, or a computing error or a computing failure occurs, a CMF may indicate an edge computing node that has completed a computing task to perform new joint transmission again. As shown in FIG. 4B, because the MEC 3 cannot compute output data in a timely manner, the CMF or a MEC 1 and a MEC 2 may indicate a gNB 1 and a gNB 2 to jointly transmit all sub-results. In other words, the gNB 1 and the gNB 2 jointly transmit A2(x) in a CJT manner, and jointly transmit A1(x) and A3(x) in an NCJT manner. In this case, a UE does not need to wait for a computing result of the MEC 3, but may obtain a final rendering result A'(X) by combining rendering results A2(x) jointly transmitted in the CJT manner by the gNB 1 and the gNB2, and A1(x) and A3(x) that are jointly transmitted in the NCJT manner by the gNB 1 and the gNB. In this way, the rendering result A'(X) with acceptable quality can be obtained, and no definite (sometimes unacceptable) delay is caused due to the straggler phenomenon.

In addition, if a quantity of edge computing nodes (for example, the MEC 1, the MEC 2, and the MEC 3 in FIG. 4B) that encounter the computing failure exceeds a specific threshold, the CMF may re-initiate a computing service request. Additionally or alternatively, the CMF may return a computing service failure to the UE as a computing request response (for example, refer to the computing request response 204 in FIG. 2). Specifically, for example, in the embodiment shown in FIG. 4B, if execution processes of the MEC 2 and the MEC 3 are severely lagged behind (for example, exceed a specific time threshold), or a computing error or a computing failure occurs, because a computing result corresponding to a rendering model A3 cannot be obtained, the CMF may re-initiate the computing service request to the MEC nodes (the MEC 1, the MEC 2, and the MEC 3 in FIG. 4B), and require the MEC nodes to re-use allocated rendering models {A1, A2}, {A2, A3}, and {A1, A3} to perform rendering computing on to-be-rendered data X. Additionally or alternatively, the CMF may return, to the UE in the computing request response, information indicating a "computing service failure", so that the UE determines whether to re-initiate a computing request (for example, the computing request 201 in FIG. 2) or not.

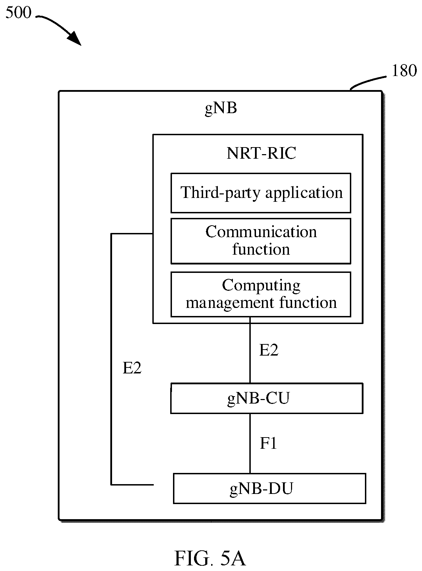

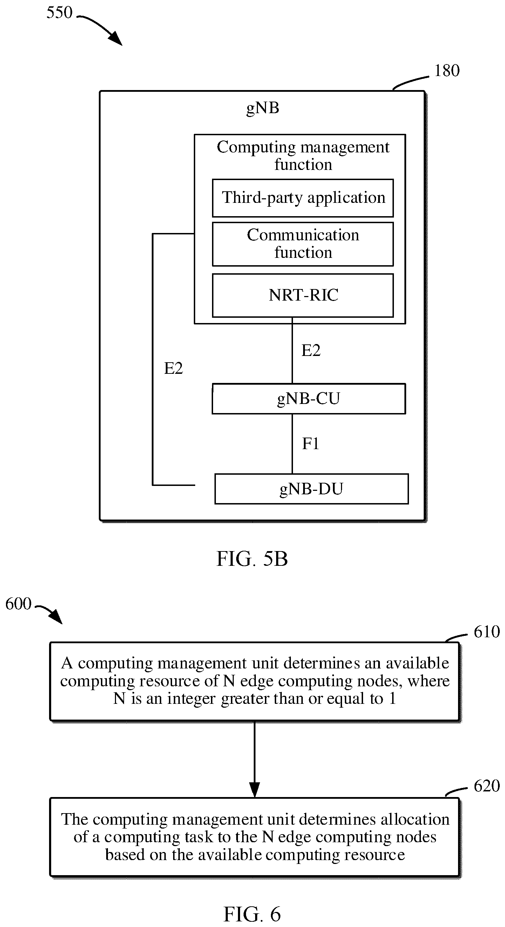

This application further considers that in an O-RAN architecture, a gNB is configured with a RIC (RAN Intelligent Controller, RAN intelligent controller) functional entity, and the RIC functional entity includes an NRT-RIC (Near Real-Time RIC, near real-time RIC) functional module and a Non-RT RIC (Non-Real-Time RIC, non-real-time RIC) functional module. An edge computing architecture/radio computing network architecture may be implemented based on the O-RAN architecture. For details, refer to FIG. 5A and FIG. 5B.

FIG. 5A is a diagram of an O-RAN architecture 500 according to an embodiment of this application. As shown in FIG. 5A, a computing management function (CMF) is integrated in an NRT-RIC functional entity of a gNB. In addition, a third-party computing application may further run in the NRT-RIC functional entity of the gNB. A RIC protocol layer is located above an RRC layer, and cmf-container may be added to a RIC message to carry a CMF message. For example, cmf-container may be an optional (optional) octet string (octet string) in the RIC message, and is used to convey CMF-related information.

FIG. 5B is a diagram of an O-RAN architecture 550 according to an embodiment of this application. As shown in FIG. 5B, an NRT-RIC function is integrated in a CMF functional entity on a RAN. In addition, a third-party computing application may further run in the CMF functional entity on the RAN. ric-container is added to an ECC protocol layer message corresponding to the CMF function, to carry a RIC message. For example, ric-container may be an optional (optional) octet string (octet string) in the ECC protocol layer message, and is used to convey RIC-related information.

In the embodiments shown in FIG. 5A and FIG. 5B, the NRT-RIC functional entity of the gNB is used to implement the edge computing architecture/radio computing network architecture based on the O-RAN architecture. Alternatively, the NRT-RIC may be replaced with the non-NRT RIC as a variant example. In other words, for example, the NRT-RIC shown in FIG. 5A and FIG. 5B may be replaced with the non-NRT RIC, and the edge computing architecture/radio computing network architecture based on the O-RAN architecture is implemented via the non-NRT RIC functional entity of the gNB. For example, the CMF function and the third-party computing application may alternatively be deployed in the non-NRT RIC module.

In comparison with a conventional O-RAN architecture and a conventional MEC architecture, the embodiments shown in FIG. 5A and FIG. 5B and variant examples thereof provide an edge computing architecture that is controlled by the RAN and that is implemented based on the O-RAN architecture. The CMF function is integrated in the NRT-RIC or the non-NRT RIC functional entity of the gNB, and runs the third-party computing application. In this way, the edge computing architecture can be combined with the conventional O-RAN architecture, and the O-RAN architecture and interface are slightly changed, so that a computing power network architecture controlled by the RAN is implemented. In addition, a third-party application runs on an open RIC module. This does not cause a security risk due to an external risk.

FIG. 6 is a flowchart of an example method 600 performed by a computing management unit according to some embodiments of this application. The following describes the example method 600 with reference to FIG. 1A, FIG. 1B, and FIG. 2. In a possible implementation, the example method 600 is performed by a computing management unit 122 (computing management functional entity) on a RAN 120 side in a communication system 100. In another possible implementation, the method 600 may alternatively be implemented by another communication apparatus independent of a communication system 100. In an example, the example method 600 is described below by using an example of being performed by the computing management unit 122 in the communication system 100.

In step 610, the computing management unit 122 on the radio access network determines an available computing resource of N edge computing nodes, where N is an integer greater than or equal to 1. In step 620, the computing management unit 122 determines allocation of a computing task to the N edge computing nodes based on the available computing resource. In this manner, a solution in which the CMF function on the RAN side locally controls an edge computing node to perform joint computing and task allocation is simple and convenient, and no conventional MEC host and MEC configuration server needs to be additionally deployed. This can simplify joint computing between edge computing nodes, so that a data forwarding delay can be reduced, and use efficiency of the edge computing node can be improved.

In some embodiments, the computing management unit 122 may be located on the radio access network and/or a core network. In this manner, the solution in which the CMF on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay is reduced, and the use efficiency of the edge computing node is improved.

In some embodiments, to determine the allocation of the computing task to the N edge computing nodes, the computing management unit 122 may determine the allocation of the computing task to the N edge computing nodes based on capability information, where the capability information includes at least one of computing capability information, service capability information, or communication capability information. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, before determining the allocation of the computing task to the N edge computing nodes, the computing management unit 122 may receive the capability information from the N edge computing nodes. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the computing management unit receives a computing request (for example, the computing request 201 shown in FIG. 2) from a terminal device. In this manner, the solution in which the CMF function on the RAN side locally controls the edge computing node to perform joint computing and task allocation is simple and convenient, so that the data forwarding delay can be reduced, and the use efficiency of the edge computing node can be improved.

In some embodiments, the computing request may include at least one of a service type, a computing power requirement, or a communication requirement. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the computing request further includes information related to a subtask decomposed from the computing task. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, to determine the allocation of the computing task to the N edge computing nodes, the computing management unit 122 selects M edge computing nodes from the N edge computing nodes based on at least one of the capability information or the computing request, where M is an integer greater than or equal to 1, and M is less than or equal to N. The computing management unit 122 determines allocation of the computing task to the M edge computing nodes. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the computing management unit 122 sends allocation indication information to the M edge computing nodes, where the allocation indication information indicates the allocation. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the allocation indication information may include information about one or more subtasks of the computing task, and information about allocation of the one or more subtasks to the M edge computing nodes. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the allocation indication information may include a set including a number of the one or more subtasks of the computing task, and an association relationship between the one or more subtasks and the M edge computing nodes, where the association relationship indicates a specific edge computing node in the M edge computing nodes that completes the one or more subtasks or specific edge computing nodes that repeatedly complete the one or more subtasks. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the computing management unit 122 sends a computing request response to the UE in response to the computing request, where the computing request response includes at least one of the following: information about a plurality of subtasks of the computing task, and information about allocation of the plurality of subtasks to the M edge computing nodes, or a transmission manner of a computing result of each of a plurality of subtasks. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved. RAN AI computing and application App computing may be further uniformly designed to simplify a system and reduce costs.

In some embodiments, the computing request may include at least one of the service type, the computing power requirement, or the communication requirement. The service type may include at least one of a service type identifier or an application ID. The computing power requirement includes at least one of a processor type, a processor quantity, a processor dominant frequency, or a processor operation capability. The communication requirement includes at least one of a data transmission bit rate, a data transmission throughput, a data packet transmission delay, data transmission reliability, or a 5G quality of service indicator defined by a 5GS. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved. The RAN AI computing and the application computing may be further uniformly designed to simplify the system and reduce the costs.

In some embodiments, the computing management unit sends a joint transmission indication to the M edge computing nodes, where the joint transmission indication may indicate one or more groups of edge computing nodes including one or more of the M edge computing nodes to jointly send a computing result of the one or more subtasks to the terminal device. In this manner, the CMF on the RAN side may control a plurality of edge computing nodes to perform joint transmission, so that the use efficiency of the edge computing node is improved, a physical layer transmission rate and physical layer transmission reliability are effectively improved, and traffic steering via a user plane anchor is not needed, thereby reducing the data forwarding delay.

In some embodiments, the joint transmission indication may further indicate the one or more groups of edge computing nodes to perform time synchronization and/or content synchronization on the computing result of the one or more subtasks. In this manner, the CMF on the RAN side may control the plurality of edge computing nodes to perform joint transmission, so that the use efficiency of the edge computing node is improved, the physical layer transmission rate and the physical layer transmission reliability are effectively improved, and the traffic steering via the user plane anchor is not needed, thereby reducing the data forwarding delay.

In some embodiments, the joint transmission indication may include number information of the one or more subtasks corresponding to the jointly transmitted computing result, information about an edge computing node associated with the one or more subtasks, and information about a position of a time-frequency resource used to perform joint transmission of the computing result. In this manner, the CMF on the RAN side may control the plurality of edge computing nodes to perform joint transmission, so that the use efficiency of the edge computing node is improved, the physical layer transmission rate and the physical layer transmission reliability are effectively improved, and the traffic steering via the user plane anchor is not needed, thereby reducing the data forwarding delay.

In some embodiments, the computing management unit 122 further performs at least one of the following operations: at least one of registration, management, discovery, and update of an application App; at least one of distributed or centralized management, allocation, migration, or offloading of a computing task; providing radio network information (Radio Network Information, RNI) and location information of a user equipment for an application App; performing application programming interface (Application Programming Interface, API) release and RNI access management; or interacting, by using control plane signaling or user plane signaling, with at least one of the following: the N edge computing nodes, the user equipment, an application App running on the N edge computing nodes, or an application App running on the user equipment. In this manner, the CMF on the RAN side may control the plurality of edge computing nodes to perform joint transmission, so that the use efficiency of the edge computing node is improved, the physical layer transmission rate and the physical layer transmission reliability are effectively improved, and the traffic steering via the user plane anchor is not needed, thereby reducing the data forwarding delay. The RAN AI computing and the application computing may be further uniformly designed to simplify the system and reduce the costs.

In some embodiments, the computing management unit 122 is included in a base station. For example, the computing management unit 122 may be included in a central unit (Central Unit, CU) of the base station. Alternatively, the computing management unit 122 may be integrated in an NRT-RIC or a Non-RT RIC of the base station. Alternatively, the computing management unit 122 may integrate an NRT-RIC or a Non-RT RIC in the base station, and run a third-party application App. In this manner, the RAN may control capability exposure of the RAN, so that there is no security risk. The RAN AI computing and the application App computing are uniformly designed to simplify the system and reduce the costs. An App runs on the RAN (for example, on an open RIC module) and is not exposed to a security risk due to an external factor. Therefore, a leakage risk can be avoided and security is higher. An edge computing architecture is combined with an O-RAN architecture, so that the O-RAN architecture and interface are slightly changed. This is easy to implement. In addition, the App may optimize service experience based on the radio network information.

In some embodiments, the computing management unit 122 may be independent of the N edge computing nodes. In this manner, the solution in which the CMF function on the RAN side may still locally control the plurality of edge computing nodes to perform joint computing and task allocation is used. This can simplify the joint computing between the edge computing nodes, so that the data forwarding delay can be reduced, and the use efficiency of the edge computing node can be improved. In addition, a coupling degree between the computing management unit and the N edge computing nodes is low, so that a system design and an implementation of the system design can be simplified, and system maintenance is easy.

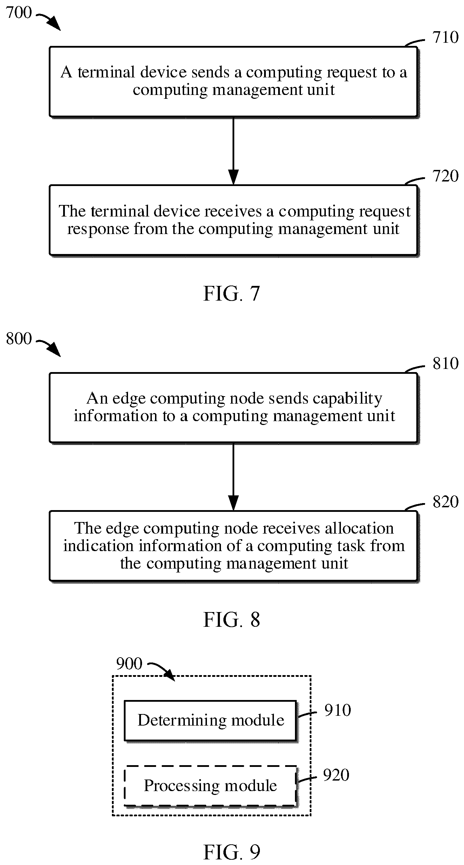

FIG. 7 is a flowchart of an example method performed by a terminal device according to some embodiments of this application. The following describes the example method 700 with reference to FIG. 1A, FIG. 1B, and FIG. 2. In a possible implementation, the example method 700 is performed by a terminal device (for example, the UE 110 shown in FIG. 1A, FIG. 1B, and FIG. 2) in a communication system 100. In another possible implementation, the method 700 may alternatively be implemented by another communication apparatus independent of a communication system 100. In an example, the example method 700 is described below by using an example of being performed by the UE 110 in the communication system 100.

In step 710, the UE 110 sends a computing request (for example, the computing request 201 shown in FIG. 2) to a computing management unit (for example, the computing management unit 122 shown in FIG. 1A, FIG. 1B, and FIG. 2). In step 720, the UE 110 receives a computing request response (for example, the computing request response 204 shown in FIG. 2) from the computing management unit 122. As described in FIG. 2 and FIG. 6, the computing request response includes at least one of the following: information about a plurality of subtasks of a computing task, and information about allocation of the plurality of subtasks to M edge computing nodes, or a transmission manner of a computing result of each of a plurality of subtasks, where M is an integer greater than or equal to 1. In this manner, a solution in which a CMF function on a RAN side locally controls an edge computing node to perform joint computing and task allocation is simple and convenient, and no conventional MEC host and MEC configuration server needs to be additionally deployed. This can simplify joint computing between edge computing nodes, so that a data forwarding delay can be reduced, and use efficiency of the edge computing node can be improved.

In some embodiments, the computing request may include at least one of a service type, a computing power requirement, or a communication requirement. The service type may include at least one of a service type identifier or an application ID. The computing power requirement may include at least one of a processor type, a processor quantity, a processor dominant frequency, or a processor operation capability. The communication requirement includes at least one of a data transmission bit rate, a data transmission throughput, a data packet transmission delay, data transmission reliability, or a 5QI defined by a 5G system. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved. RAN AI computing and application computing may be further uniformly designed to simplify a system and reduce costs.

In some embodiments, the computing request may further include information related to a subtask decomposed from the computing task. In this manner, the solution in which the CMF function on the RAN side locally controls the edge computing node to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the UE 110 offloads the computing task to the M edge computing nodes in response to the computing request response, where the M edge computing nodes include at least one of the following: a base station, another terminal device, a MEC platform, a core network function, or a wireless backhaul network node. In this manner, a solution in which the CMF function on the RAN side locally controls a plurality of edge computing nodes to perform joint computing and task allocation is simple and convenient, and no conventional MEC host and MEC configuration server needs to be additionally deployed. This can simplify joint computing between the plurality of edge computing nodes, so that the data forwarding delay can be reduced, and the use efficiency of the edge computing node can be improved. The RAN AI computing and the application App computing may be further uniformly designed to simplify the system and reduce the costs.

In some embodiments, to offload the computing task to the M edge computing nodes, the UE 110 uploads to-be-computed data to the M edge computing nodes. The UE 110 receives, from the M edge computing nodes, a computing result corresponding to the to-be-computed data. In this manner, the joint computing between the plurality of edge computing nodes can be simplified, so that the data forwarding delay can be reduced, and the use efficiency of the edge computing node can be improved.

In some embodiments, to upload the to-be-computed data to the M plurality of edge computing nodes, the UE 110 uploads the to-be-computed data to a first edge computing node in the M edge computing nodes. The first edge computing node forwards the to-be-computed data to another edge computing node in the M edge computing nodes. In this way, the data forwarding delay can be reduced, and the use efficiency of the edge computing node can be improved.

In some embodiments, to receive the computing result from the M edge computing nodes, the UE 110 receives, from the M edge computing nodes, the computing result jointly transmitted by the M edge computing nodes. In this manner, the CMF on the RAN side controls the plurality of edge computing nodes to perform joint transmission, so that a physical layer transmission rate and physical layer transmission reliability are effectively improved, and traffic steering via a user plane anchor is not needed, thereby reducing the data forwarding delay and improving the use efficiency of the edge computing node.

FIG. 8 is a flowchart of an example method 800 performed by an edge computing node according to some embodiments of this application. The following describes the example method 800 with reference to FIG. 1A, FIG. 1B, and FIG. 2. In a possible implementation, the example method 800 is performed by an edge computing node (for example, the edge computing node 124 shown in FIG. 1A and FIG. 2) on a RAN 120 side in a communication system 100. In another possible implementation, the method 800 may alternatively be implemented by another communication apparatus independent of a communication system 100. In an example, the example method 800 is described below by using an example of being performed by the edge computing node 124 in the communication system 100.

In step 810, the edge computing node 124 sends capability information to a computing management unit (for example, the computing management unit 122 shown in FIG. 1A and FIG. 2). The capability information includes at least one of computing capability information, service capability information, or communication capability information. In step 820, the edge computing node 124 receives allocation indication information of a computing task from the computing management unit 122. In this manner, a CMF on the RAN side can control a plurality of edge computing nodes to perform joint transmission, so that a physical layer transmission rate and physical layer transmission reliability are effectively improved, and traffic steering via a user plane anchor is not needed, thereby reducing a data forwarding delay and improving use efficiency of the edge computing node.

In some embodiments, the allocation indication information may include information about a plurality of subtasks of the computing task and information about allocation of the plurality of subtasks to M edge computing nodes including the edge computing node, where M is an integer greater than or equal to 1. In this manner, a solution in which the CMF function on the RAN side locally controls the plurality of edge computing nodes to perform joint computing and task allocation is simple and convenient, and no conventional MEC host and MEC configuration server needs to be additionally deployed. This can simplify joint computing between edge computing nodes, so that the data forwarding delay can be reduced, and the use efficiency of the edge computing node can be improved.

In some embodiments, the edge computing node 124 receives to-be-computed data of one or more subtasks from a UE (for example, the UE 110 shown in FIG. 1A, FIG. 1B, and FIG. 2). The edge computing node 124 sends, to the UE, a computing result corresponding to the to-be-computed data. In this manner, the solution in which the CMF function on the RAN side locally controls the plurality of edge computing nodes to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, that the edge computing node 124 receives the to-be-computed data from the UE includes: The edge computing node 124 directly receives the to-be-computed data from the UE; or the edge computing node 124 receives the to-be-computed data from another edge computing node 124 that directly receives the to-be-computed data. In this manner, the solution in which the CMF function on the RAN side locally controls the plurality of edge computing nodes to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the edge computing node 124 sends, to another edge computing node 124 that participates in computing of the to-be-computed data, the to-be-computed data directly received from the UE. In this manner, the solution in which the CMF function on the RAN side locally controls the plurality of edge computing nodes to perform joint computing and task allocation is simple and convenient, and no conventional MEC host and MEC configuration server needs to be additionally deployed. This can simplify the joint computing between the edge computing nodes, so that the data forwarding delay can be reduced, and the use efficiency of the edge computing node can be improved.

In some embodiments, the edge computing node 124 receives a joint transmission indication from the computing management unit. In this manner, the CMF on the RAN side controls the plurality of edge computing nodes 124 to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

In some embodiments, the edge computing node 124 synchronizes, based on the joint transmission indication, the computing result with another edge computing node 124 that receives the joint transmission indication. Alternatively, the edge computing node 124 may synchronize the computing result by negotiating with another edge computing node 124 that receives the joint transmission indication. In this manner, the CMF on the RAN side controls the plurality of edge computing nodes to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

In some embodiments, the synchronization includes at least one of time synchronization or content synchronization. In this manner, the CMF on the RAN side controls the plurality of edge computing nodes 124 to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

In some embodiments, to send the computing result to the UE, the edge computing node 124 and the another edge computing node 124 jointly transmit a synchronized computing result to the UE. In this manner, the CMF on the RAN side controls the plurality of edge computing nodes to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

In some embodiments, to jointly transmit the synchronized computing result to the UE, the edge computing node 124 and the another edge computing node 124 jointly transmit the computing result in at least one of the following joint transmission manners: a coherent joint transmission manner, a non-coherent joint transmission manner, or a combination thereof. In this manner, the CMF on the RAN side controls the plurality of edge computing nodes to perform joint transmission, so that the physical layer transmission rate and the physical layer transmission reliability are effectively improved, and the traffic steering via the user plane anchor is not needed, thereby reducing the data forwarding delay and improving the use efficiency of the edge computing node.

FIG. 9 is a block diagram of a first communication apparatus 900 according to some embodiments of this application. The first communication apparatus 900 may be implemented as a device or a chip in the device, and the scope of this application is not limited in this aspect. The first communication apparatus 900 may include a plurality of modules to perform corresponding steps in the method 600 discussed in FIG. 6. The first communication apparatus 900 may be implemented as the computing management unit 122 shown in FIG. 2, a part of the computing management unit 122, or a chip in the computing management unit 122.

As shown in FIG. 9, the first communication apparatus 900 includes a determining module 910. In some embodiments, the first communication apparatus 900 may further include a processing module 920. The determining module 910 is configured to determine an available computing resource and allocation of a computing task to edge computing nodes. The processing module 920 is configured to process data. For example, in some embodiments, the determining module 910 is configured to: determine an available computing resource of N edge computing nodes, and determine allocation of a computing task to the N edge computing nodes based on the available computing resource, where N is an integer greater than or equal to 1. The processing module 920 is, for example, configured to send, to a related edge computing node, allocation indication information indicating the allocation. For specific content, refer to the descriptions of FIG. 2 and FIG. 6. Details are not described herein again.

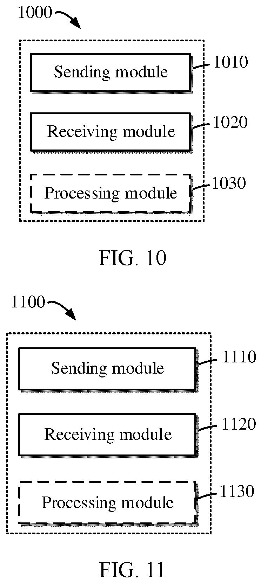

FIG. 10 is a block diagram of a second communication apparatus 1000 according to some embodiments of this application. The second communication apparatus 1000 may be implemented as a device or a chip in the device, and the scope of this application is not limited in this aspect. The second communication apparatus 1000 may include a plurality of modules to perform corresponding steps in the method 700 discussed in FIG. 7. The second communication apparatus 1000 may be implemented as the UE 110 shown in FIG. 2, a part of the UE 110, or a chip in the UE 110.

As shown in FIG. 10, the second communication apparatus 1000 includes a sending module 1010 and a receiving module 1020. In some embodiments, the second communication apparatus 1000 may further include a processing module 1030. The sending module 1010 is configured to send data, the receiving module 1020 is configured to receive data, and the processing module 1030 is configured to process data. For example, in some embodiments, the sending module 1010 is configured to send a computing request to a computing management unit, and the receiving module 1020 is configured to receive a computing request response from the computing management unit. The processing module 1030 is, for example, configured to offload a computing task to a radio access network or another terminal device. For specific content, refer to the descriptions of FIG. 2 and FIG. 7. Details are not described herein again. It should be noted that the sending module 1010 and the receiving module 1020 may alternatively be integrated together, for example, integrated into a sending and receiving module. The sending and receiving module may implement functions of the sending module 1010 and the receiving module 1020 shown in FIG. 10.

FIG. 11 is a block diagram of a third communication apparatus 1100 according to some embodiments of this application. The third communication apparatus 1100 may be implemented as a device or a chip in the device, and the scope of this application is not limited in this aspect. The third communication apparatus 1100 may include a plurality of modules to perform corresponding steps in the method 800 discussed in FIG. 8. The third communication apparatus 1100 may be implemented as the edge computing node 124 shown in FIG. 2, a part of the edge computing node 124, or a chip in the edge computing node 124.

As shown in FIG. 11, the third communication apparatus 1100 includes a sending module 1110 and a receiving module 1120. In some embodiments, the third communication apparatus 1100 may further include a processing module 1130. The sending module 1110 is configured to send data, the receiving module 1120 is configured to receive data, and the processing module 1130 is configured to process data. For example, in some embodiments, the sending module 1110 is configured to send capability information to a computing management unit, and the receiving module 1120 is configured to receive allocation indication information of a computing task from the computing management unit, where the capability information includes at least one of computing capability information, service capability information, or communication capability information. The processing module 1130 is, for example, configured to perform computing on to-be-computed data based on the allocation indication information, to obtain a local computing result. For specific content, refer to the descriptions of FIG. 2 and FIG. 8. Details are not described herein again. It should be noted that the sending module 1110 and the receiving module 1120 may alternatively be integrated together, for example, integrated into a sending and receiving module. The sending and receiving module may implement functions of the sending module 1110 and the receiving module 1120 shown in FIG. 11.

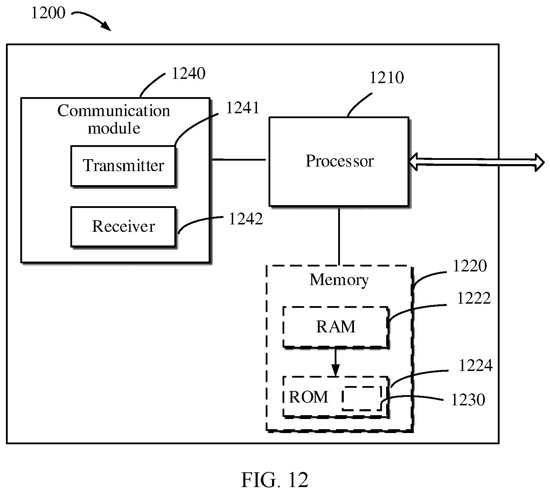

FIG. 12 is a simplified block diagram of an example device 1200 suitable for implementing an embodiment of this application. The example device 1200 may be configured to implement the computing management unit 122, the UE 110, or the edge computing node 124 shown in FIG. 1A or FIG. 2. As shown in the figure, the example device 1200 includes one or more processors 1210 and a communication module 1240 coupled to the processor 1210. In some embodiments, a memory 1220 and the processor 1210 may be integrated together. In some embodiments, the example device 1200 may further include one or more memories 1220 coupled to the processor 1210. In some embodiments, the example device 1200 may alternatively not include a memory.

The communication module 1240 may be configured to perform bidirectional communication. The communication module 1240 may include a transmitter 1241 configured to send data and a receiver 1242 configured to receive data. When the device 1200 is configured to implement the UE 110 shown in FIG. 2, the transmitter 1241 is configured to implement a function of the sending module 1010 shown in FIG. 10, and the receiver 1242 is configured to implement a function of the receiving module 1020 shown in FIG. 10. When the device 1200 is configured to implement the edge computing device 124 shown in FIG. 2, the transmitter 1241 is configured to implement a function of the sending module 1110 shown in FIG. 11, and the receiver 1242 is configured to implement a function of the receiving module 1120 shown in FIG. 11.

The processor 1210 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 1200 may have a plurality of processors, for example, application-specific integrated circuit chips, which in time belong to a clock synchronized with a main processor.

The memory 1220 may include one or more non-volatile memories and one or more volatile memories. Examples of the non-volatile memory include but are not limited to at least one of the following: a read-only memory (Read-Only Memory, ROM) 1224, an erasable programmable read-only memory (Erasable Programmable Read-Only Memory, EPROM), a flash memory, a hard disk, a compact disc (Compact Disc, CD), a digital versatile disc (Digital Versatile Disc, DVD), or another magnetic storage and/or optical storage. Examples of the volatile memory include but are not limited to at least one of the following: a random access memory (Random Access Memory, RAM) 1222, or another volatile memory that does not last for power-off duration.

A computer program 1230 includes computer-executable instructions executed by an associated processor 1210. The program 1230 may be stored in the ROM 1224. The processor 1210 may perform any suitable action and processing by loading the program 1230 into the RAM 1222.

Embodiments of this specification may be implemented by using the program 1230, so that the device 1200 can perform any process discussed with reference to FIG. 2. Embodiments of this application may alternatively be implemented by hardware or a combination of software and hardware.

In some embodiments, the program 1230 may be tangibly included in a computer-readable medium, and the computer-readable medium may be included in the device 1200 (for example, in the memory 1220) or another storage device that can be accessed by the device 1200. The program 1230 may be loaded from the computer-readable medium into the RAM 1222 for execution. The computer-readable medium may include any type of tangible non-volatile memory, for example, a ROM, an EPROM, a flash memory, a hard disk, a CD, or a DVD.

Usually, various embodiments of this specification may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this specification are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This specification further provides at least one computer program product tangibly stored in a non-transitory computer-readable storage medium. The computer program product includes computer-executable instructions, such as instructions included in a program module, executed in a device on a real or virtual target processor to perform the process/method as described above with reference to FIG. 4A to FIG. 9. Usually, the program module includes a routine, a program, a library, an object, a class, a component, a data structure, and the like that execute a specific task or implements a specific abstract data type. In various embodiments, functions of program modules may be combined or split between the program modules as required. Machine-executable instructions for the program module may be executed locally or in a distributed device. In the distributed device, the program module may be locally located and located in a remote storage medium.

Computer program code used for implementing the method in this specification may be written in one or more programming languages. The computer program code may be provided for a processor of a general-purpose computer, a dedicated computer, or another programmable data processing apparatus, so that when the program code is executed by a computer or the another programmable data processing apparatus, functions/operations specified in the flowcharts and/or block diagrams are implemented. The program code may be executed entirely on the computer, partly on the computer, as a standalone software package, partly on the computer and partly on a remote computer, or entirely on a remote computer or a server.

In the context of this specification, the computer program code or related data may be carried in any suitable carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this specification are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more apparatuses according to this specification may be specific in one apparatus. Instead, features and functions of one apparatus described above may be further specific in a plurality of apparatuses.

The flowcharts and block diagrams in the accompanying drawings show system architectures, functions, and operations of possible implementations of devices, methods, and computer program products according to a plurality of embodiments of this application. In this regard, each block in the flowcharts or block diagrams may represent a module, a program segment, or a part of instructions, and the module, the program segment, or the part of instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function. It should also be noted that each block in the block diagrams and/or flowcharts, and the combination of the blocks in the block diagrams and/or flowcharts may be implemented by a dedicated hardware-based system that performs a specified function or action, or may be implemented by a combination of dedicated hardware and computer instructions.

The foregoing has described various implementations of this specification. The foregoing descriptions are examples, are not exhaustive, and are not limited to the disclosed implementations. Without departing from the scope of the described implementations, many modifications and variations are apparent to a person of ordinary skill in the art. Selection of the terms used in this specification is intended to well explain principles of the implementations, actual applications, or improvements to technologies in the market, or to enable another person of ordinary skill in the art to understand the implementations in this specification.

## Claims

1. A communication method, comprising:
determining, by a computing management unit, an available computing resource of N edge computing nodes, wherein N is an integer greater than or equal to 1; and
determining, by the computing management unit, allocation of a computing task to the N edge computing nodes based on the available computing resource.

2. The communication method according to claim 1, wherein the computing management unit is located in a radio access network device and/or a core network device.

3. The communication method according to claim 1, wherein the determining allocation of a computing task to the N edge computing nodes comprises:
determining, by the computing management unit, the allocation of the computing task to the N edge computing nodes based on capability information, wherein the capability information comprises at least one of computing capability information, service capability information, or communication capability information.

4. The communication method according to claim 3, wherein before the determining allocation of a computing task to the N edge computing nodes, the method further comprises:
receiving, by the computing management unit, the capability information from the N edge computing nodes.

5. The communication method according to claim 3 or 4, further comprising:
receiving, by the computing management unit, a computing request from a terminal device.

6. The communication method according to claim 5, wherein the computing request comprises at least one of a service type, a computing power requirement, or a communication requirement.

7. The communication method according to claim 6, wherein the computing request further comprises information related to a subtask decomposed from the computing task.

8. The communication method according to any one of claims 5 to 7, wherein the determining allocation of a computing task to the N edge computing nodes comprises:
selecting, by the computing management unit, M edge computing nodes from the N edge computing nodes based on at least one of the capability information or the computing request, wherein M is an integer greater than or equal to 1, and M is less than or equal to N; and determining, by the computing management unit, allocation of the computing task to the M edge computing nodes.

9. The communication method according to claim 8, further comprising:
sending, by the computing management unit, allocation indication information to the M edge computing nodes, wherein the allocation indication information indicates the allocation.

10. The communication method according to claim 9, wherein the allocation indication information comprises information about one or more subtasks of the computing task, and information about allocation of the one or more subtasks to the M edge computing nodes.

11. The communication method according to any one of claims 5 to 10, further comprising:
sending, by the computing management unit, a computing request response to the terminal device in response to the computing request, wherein
the computing request response comprises at least one of the following: information about a plurality of subtasks of the computing task, and information about allocation of the plurality of subtasks to the M edge computing nodes, or
a transmission manner of a computing result of each of the plurality of subtasks.

12. The communication method according to claim 11, further comprising:
sending, by the computing management unit, a joint transmission indication to the M edge computing nodes, wherein the joint transmission indication indicates one or more groups of edge computing nodes comprising one or more of the M edge computing nodes to jointly send a computing result of the one or more subtasks to the terminal device.

13. The communication method according to claim 12, wherein the joint transmission indication further indicates the one or more groups of edge computing nodes to perform time synchronization and/or content synchronization on the computing result of the one or more subtasks.

14. The communication method according to any one of claims 1 to 13, wherein the computing management unit further performs at least one of the following operations:
at least one of registration, management, discovery, or update of an application App running on the N edge nodes;
at least one of distributed or centralized management, allocation, migration, or offloading of a computing task;
providing radio network information (RNI) and location information of a terminal device for an application App;
performing application programming interface (API) release and RNI access management; or
interacting, by using control plane signaling or user plane signaling, with at least one of the following: the N edge computing nodes, the terminal device, an application App running on the N edge computing nodes, or an application App running on the terminal device.

15. A communication method, comprising:
sending, by a terminal device, a computing request to a computing management unit; and
receiving, by the terminal device, a computing request response from the computing management unit, wherein
the computing request response comprises at least one of the following: information about a plurality of subtasks of a computing task, and information about allocation of the plurality of subtasks to M edge computing nodes, or
a transmission manner of a computing result of each of the plurality of subtasks, wherein
M is an integer greater than or equal to 1.

16. The communication method according to claim 15, wherein the computing request comprises at least one of a service type, a computing power requirement, or a communication requirement.

17. The communication method according to claim 16, wherein the computing request further comprises information related to a subtask decomposed from the computing task.

18. The communication method according to any one of claims 15 to 17, further comprising:
offloading, by the terminal device, the computing task to the M edge computing nodes in response to the computing request response, wherein the M edge computing nodes comprise at least one of the following: a base station, another terminal device, a multi-access edge computing platform, a core network function, or a wireless backhaul network node.

19. The communication method according to claim 18, wherein the offloading the computing task to the M edge computing nodes comprises:
uploading, by the terminal device, to-be-computed data to the M edge computing nodes; and
receiving, by the terminal device from the M edge computing nodes, a computing result corresponding to the to-be-computed data.

20. The communication method according to claim 19, wherein the uploading to-be-computed data to the M plurality of edge computing nodes comprises:
uploading, by the terminal device, the to-be-computed data to a first edge computing node in the M edge computing nodes; and forwarding, by the first edge computing node, the to-be-computed data to another edge computing node in the M edge computing nodes.

21. The communication method according to claim 20, wherein the receiving a computing result from the M edge computing nodes comprises:
receiving, by the terminal device from the M edge computing nodes, the computing result jointly backhauled by the M edge computing nodes.

22. A communication method, comprising:
sending, by an edge computing node, capability information to a computing management unit; and
receiving, by the edge computing node, allocation indication information of a computing task from the computing management unit, wherein
the capability information comprises at least one of computing capability information, service capability information, or communication capability information.

23. The communication method according to claim 22, wherein the allocation indication information comprises information about a plurality of subtasks of the computing task and information about allocation of the plurality of subtasks to M edge computing nodes comprising the edge computing node, wherein M is an integer greater than or equal to 1.

24. The communication method according to claim 22 or 23, further comprising:
receiving, by the edge computing node, to-be-computed data of one or more subtasks from a terminal device; and
sending, by the edge computing node to the terminal device, a computing result corresponding to the to-be-computed data.

25. The communication method according to claim 24, wherein the receiving, by the edge computing node, to-be-computed data from a terminal device comprises:
directly receiving, by the edge computing node, the to-be-computed data from the terminal device; or
receiving, by the edge computing node, the to-be-computed data from another edge computing node that directly receives the to-be-computed data.

26. The communication method according to claim 24, further comprising:
sending, by the edge computing node to another edge computing node that participates in computing of the to-be-computed data, the to-be-computed data directly received from the terminal device.

27. The communication method according to any one of claims 22 to 26, further comprising:
receiving, by the edge computing node, a joint transmission indication from the computing management unit.

28. The communication method according to claim 27, further comprising:
synchronizing, by the edge computing node based on the joint transmission indication, the computing result with another edge computing node that receives the joint transmission indication; or
synchronizing, by the edge computing node, the computing result by negotiating with another edge computing node that receives the joint transmission indication.

29. The communication method according to claim 28, wherein the sending, by the edge computing node to the terminal device, a computing result comprises:
jointly transmitting, by the edge computing node and the another edge computing node, a synchronized computing result to the terminal device.

30. The communication method according to claim 28, wherein the synchronization comprises at least one of time synchronization or content synchronization.

31. The communication method according to claim 29, wherein the jointly transmitting a synchronized computing result to the terminal device comprises:
jointly transmitting, by the edge computing node and the another edge computing node, the computing result in at least one of the following joint transmission manners: a coherent joint transmission manner, a non-coherent joint transmission manner, or a combination thereof.

32. A communication apparatus, comprising a processor and a memory, wherein the memory stores instructions executed by the processor; and when the instructions are executed by the processor, the communication apparatus is enabled to implement the method according to any one of claims 1 to 14.

33. A communication apparatus, comprising a processor and a memory, wherein the memory stores instructions executed by the processor; and when the instructions are executed by the processor, the communication apparatus is enabled to implement the method according to any one of claims 15 to 21.

34. A communication apparatus, comprising a processor and a memory, wherein the memory stores instructions executed by the processor; and when the instructions are executed by the processor, the communication apparatus is enabled to implement the method according to any one of claims 22 to 31.

35. A communication system, comprising a computing management unit for performing the method according to any one of claims 1 to 14, a terminal device for performing the method according to any one of claims 15 to 21, and an edge computing node for performing the method according to any one of claims 22 to 31, wherein the communication system is configured for implementing the method according to any one of claims 1 to 31 via the computing management unit, the terminal device, and the edge computing node.

36. A computer-readable storage medium, wherein the computer-readable storage medium stores a computer program; and when the computer program is executed by a processor, the method according to any one of claims 1 to 31 is implemented.

37. A chip, comprising a processing circuit, configured to perform the method according to any one of claims 1 to 31.

38. A computer program product, tangibly stored on a computer-readable medium and comprising computer-executable instructions, wherein when the computer-executable instructions are executed, a device is enabled to implement the method according to any one of claims 1 to 31.
